# EUROPÄISCHE PATENTSCHRIFT

(11) **EP 3 244 097 B1**
(45) Veröffentlichungstag und Bekanntmachung des Hinweises auf die Patenterteilung: **08.11.2023**
(21) Anmeldenummer: 17170166.7
(22) Anmeldetag: 09.05.2017
(51) Int. Cl.: F16H 3/72, B60K 6/387, B60K 6/547, F16D 11/14, F16H 63/30, B60K 6/365, B60K 6/445, B60K 6/36, B60K 6/48

(54) **HYBRIDANTRIEBSSTRANG MIT LASTSCHALTBAREM GETRIEBE UND VERFAHREN DES SCHALTENS EINES SOLCHEN GETRIEBES IN DEM HYBRIDANTRIEBSSTRANG**
HYBRID POWER TRAIN WITH POWERSHIFT TRANSMISSION AND METHOD OF SWITCHING SUCH A TRANSMISSION IN THE HYBRID POWER TRAIN
GROUPE MOTOPROPULSEUR HYBRIDE COMPRENANT UNE TRANSMISSION À CHANGEMENT DE RAPPORTS SOUS CHARGE ET PROCÉDÉ DE COMMUTATION D'UNE TELLE TRANSMISSION DANS UN GROUPE MOTOPROPULSEUR HYBRIDE

(30) Priorität: 09.05.2016 DE 102016108552; 10.05.2016 DE 202016102495 U; 07.06.2016 DE 202016103022 U
(43) Veröffentlichungstag der Anmeldung: 15.11.2017
(73) Patentinhaber: hofer powertrain innovation GmbH, 72622 Nürtingen (DE)
(72) Erfinder: Schneider, Severin, 73252 Lenningen (DE); Kalmbach, Klaus, 72116 Mössingen (DE); Lutz, Mathias, 72070 Tübingen (DE); Fischer, Felix, 73728 Esslingen (DE)
(74) Vertreter: Cremer, Christian

(56) Entgegenhaltungen:
- EP-A1- 2 070 756
- DE-A1- 10 021 025
- DE-A1-102010 052 262
- DE-A1-102013 223 356
- DE-B4-112007 002 558
- DE-T5-112008 001 553
- US-A1- 2016 053 864

## Beschreibung

Die vorliegende Erfindung behandelt einen Hybridantrieb mit lastschaltbarem Getriebe, in dem drei Kraftmaschinen, vorzugsweise von diesen zwei Elektromaschinen sind, vorhanden sind. Die vorliegende Erfindung beschäftigt sich zudem damit, wie Kraftflüsse über das lastschaltbare Getriebe, insbesondere leistungsverzweigte Getriebe, das auch als leistungsverzweigendes Getriebe bezeichnet wird, insbesondere durch Schaltabläufe bzw. Verfahren zum Schalten herstellbar bzw. herzustellen sind.

Mit anderen Worten, die vorliegende Erfindung behandelt einen Hybridantrieb sowie ein Verfahren zum Schalten eines entsprechenden Hybridantriebs.

### Technisches Gebiet

Hybridantriebsstränge, insbesondere jene, die in Kraftfahrzeugen wie Personenkraftfahrzeugen verbaut sind, setzen sich aus verschiedenen Antriebskomponenten zusammen, üblicherweise sind wenigstens eine Verbrennungskraftmaschine wie ein Dieselmotor oder ein benzingetriebener Motor sowie wenigstens eine Elektromaschine vorhanden. Zur Rekuperation wird die Elektromaschine häufig generatorisch betrieben. Für Beschleunigungsvorgänge oder für das Erzielen von erhöhten Endgeschwindigkeiten dient die Elektromaschine häufig als Antriebsmotor, z. B. im Teillastbereich der Verbrennungskraftmaschine zur Herstellung des sogenannten Boostbetriebs. Ein Einsatzgebiet für solche Hybridantriebstränge sind Personenkraftfahrzeuge der oberen Mittelklasse und der Oberklasse, die mit Verbrennungskraftmaschinen ausgestattet sind, die im dreistelligen kW-Bereich eine Leistung auf die Antriebsräder bringen können. Es ist allgemein bekannt, dass diese Fahrzeuge aber häufig gar nicht im optimierten Betriebspunkt betrieben werden können, weil sie z. B. auf Fahrstrecken mit Geschwindigkeitsbeschränkungen bewegt werden sollen.

Die Gestaltungsfreiräume und Konfigurationsmöglichkeiten eines solchen Hybridantriebs werden gesteigert, wenn nicht nur eine einzige Elektromaschine in dem Hybridantriebsstrang vorhanden ist, sondern neben einer ersten Elektromaschine noch eine weitere, zweite Elektromaschine. Dadurch lassen sich Kombinationen herstellen, bei denen wahlweise beide Elektromaschinen motorisch den Antriebsstrang antreiben. In einer weiteren Konfiguration bzw. Einstellung kann eine der Elektromaschinen generatorisch betrieben werden, was die Möglichkeit eines seriellen Hybrids erlaubt (elektrische Energiegewinnung). In einer Idealkonfiguration können sogar beide Elektromaschinen auf einen Generatorbetrieb geschaltet werden.

Je nach Konfiguration und Einstellung der einzelnen Antriebsmaschinen und Motoren bzw. Generatoren sind die Schaltkonfigurationen von den die Komponenten verbindenden Getrieben einzustellen, um z. B. eine Leistungsverzweigung zu realisieren, um z. B. eine Energierückgewinnung zu ermöglichen oder um z. B. eine stärkere Beschleunigung anbieten zu können.

Eine beispielhafte Zusammenstellung von besonders vorteilhaften Hybridantriebssträngen sind den Ausführungsbeispielen der DE 10 2010 052 262 B4 (Patentinhaberin: Hofer-PDC GmbH; Anmeldetag: 23.11.2010) zu entnehmen. Dieses Dokument kann als Ausgangsbasis für weitere Überlegungen und als Darstellung des technischen Hintergrunds angesehen werden.

### Stand der Technik

Ein elektrisch variierbares Getriebe mit Antriebsmaschinen und einer Anzahl elektrischer Motor-Generator-Einheiten unter Nutzung eines Planetengetriebes wird in der US 7 867 124 B2 (Patentinhaberin: GM Global Technology Operations, Inc.; Anmeldetag: 10.09.2007) vorgestellt. Durch die Nutzung von Kupplungen und Bremsen können die einzelnen Antriebs- bzw. Generatoren-Einheiten auf das Planetengetriebe aufgeschaltet werden, um unterschiedliche Getriebebetriebsweisen, wie z. B. eine Lastverteilung, eines ausschließlichen elektrischen Antriebs und eines Betriebs unter dem Aspekt der Effizienzsteigerung vornehmen zu können.

Als eine Möglichkeit der Kupplung von einzelnen Komponenten des Getriebes werden in der Schutzrechtsliteratur immer wieder Klauenkupplungen erwähnt.

In der EP 1 910 117 B1 (Patentinhaberin: Peugeot Citroen Automobiles S.A.; Prioritätstag: 02.05.2005) wird vorgeschlagen, einzelne Wellen mit sechs Klauenkupplungen wahlweise festzusetzen. Wie sich aus den Figuren entnehmen lässt, dürften die in der EP 1 910 117 B1 vorgeschlagenen Getriebe einen höheren mechanischen Aufwand und auch in Bezug auf die Anzahl der zu verbauenden Komponenten insgesamt einen höheren Aufwand erfordern.

Die US 7 195 574 B2 (Patentinhaberin: Ford Global Technologies, LLC; Prioritätstag: 21.05.2003) zeigt, wie zwei ineinander verschachtelte Planetengetriebe mit zwei Klauenkupplungen über angeschlossene Wellen auf Losräder aufgekuppelt werden können.

Auch die US 2014/171 247 A1 (Anmelder: D. Puiu et al.; Anmeldetag: 18.12.2012) beschäftigt sich mit der Kuppelbarkeit von zwei Planetengetrieben, die je nach Betrieb der Elektromaschinen aneinander gekoppelt werden sollen.

Die DE 10 2010 028 026 A1 (Anmelderin: ZF Friedrichshafen AG; Anmeldetag: 21.04.2010), die vorschlägt, zwei Elektromaschinen an Wellen eines Stirnradgetriebes anzuschließen, zeigt die weit verbreitete Auffassung, dass für jede Schaltstellung eine eigene Klauenkupplung notwendig ist. Hiervon abweichend schlägt die US 7 690 459 B2 (Patentinhaberin: Ford Global Technologies, LLC; Anmeldetag: 30.08.2006) vor, bei auf einer Welle sitzenden Stirnlosrädern die Auswahl, welches Stirnrad an die Welle zu kuppeln ist, durch eine zweiseitig einkuppelbare Klauenkupplung zu realisieren.

Bei Getrieben, die als Teil eines Hybridantriebs, insbesondere in Personenkraftfahrzeugen, verbaut werden sollen, ist auch immer frühzeitig zu überlegen, wie der Einbau und der benötigte Bauraum für das Getriebe auszugestalten sind.

Strukturierte Teilgetriebekonzepte lassen sich der US 6 719 655 B2 (Patentinhaberin: ZF Friedrichshafen; Prioritätstag: 24.10.2001) und der DE 10 2013 112 388 A1 (Anmelderin: hofer forschungs- und entwicklungs GmbH; Anmeldetag: 11.11.2013) entnehmen. In beiden Beschreibungen sind gehäuseglockenartige Anflanschgehäuse dargestellt, die Raum für ein antriebsmäßig zuerst angeordnetes Planetengetriebe und ein sich daran anschließendes Stirnradgetriebe oder ein Doppelkupplungsgetriebe bieten.

Die EP 1 625 037 B1 (Patentinhaberin: DTI Group B.V.; Anmeldetag: 10.05.2004) schlägt in einer Variante vor, einer Antriebsquelle, die über ein Getriebesystem eine Last antreiben kann, einen Elektromotor über das Getriebesystem hinzuzusetzen, wobei der Elektromotor über ein weiteres Getriebe gekoppelt wird. Eine Lock-up-Kupplung zwischen einem Planetensatz und einem weiteren Getriebe kann eine Verbindung zwischen den beiden Getriebeteilen herstellen. D. h., wahlweise kann ein Momentenfluss über das weitere Getriebe in dem Sinne geführt werden, dass das weitere Getriebe entweder zwischengeschaltet wird oder eben nicht.

Die DE 11 2009 001 348 T5 (Patentinhaberin: Toyota Jidosha Kabushiki Kaisha; Prioritätstag: 03.06.2008) zeigt in mehreren Varianten einen Antriebsstrang, der mit einer Verbrennungskraftmaschine, mit einem Elektromotor und mit zwei Antriebswellen ausgestattet ist. Mit einer Sperrkupplung SL können die beiden Antriebswellen miteinander gekoppelt werden.

Die US 2013/337 972 A1 (Anmelderin: Hyundai Motor Company; Anmeldetag: 17.07.2013) schlägt vor, einen mit einem Verbrennungsmotor ausgestatteten Antriebsstrang mit einem Elektromotor, der an einem Planetengetriebe sitzt, auszustatten. Zwischen Planetengetriebe und nachgeschaltetem Getriebe sind zwei Kupplungen angeordnet, jede verbindet auf eine von zwei Wellen.

Die DE 10 2013 223 356 A1 (Anmelderin: ZF Friedrichshafen AG; Anmeldetag: 15.11.2013) zeigt verschiedene Antriebsstränge, die jeweils eine Verbrennungskraftmaschine und einen Elektromotor haben. In einigen der Varianten kann mit zwei getrennten Kupplungen entweder der Steg eines Planetengetriebes auf eine äußere Welle geführt werden oder ein Verblocken der äußeren Welle mit einer inneren Welle realisiert werden.

Die US 8 257 213 A (Patentinhaberin: Toyota Jidosha Kabushiki Kaisha; Anmeldetag: 14.03.2007) zeigt einen Hybridantriebsstrang mit einem Verbrennungsmotor und zwei Motor-Generatoren. Der Verbrennungsmotor ist abtriebsseitig auf ein Leistungsverteilgetriebe geführt, das wiederum auf zwei Eingangswellen geführt ist. Die Gangwahl bestimmt sich aus einer Schaltstellung eines von mehreren Kupplungsmechanismen. Das Getriebekonzept erinnert stark an ein vorgeschaltetes Planetengetriebe, das fixiert eingebunden zwischen dem Verbrennungsmotor und dem eigentlichen Ganggetriebe sitzt. Die WO 2012/055 527 A1 (Anmelderin: MAGNA POWERTRAIN AG & CO KG; Prioritätstag: 25.10.2010) stellt ein gleichartiges Getriebekonzept vor, das folglich gem. internationalem Recherchebericht nahezu vollständig durch die US 8 257 213 A bzw. ihr PCT-Pendant WO 2007/110 721 A1 vorweggenommen sein soll.

Die DE 2011 089 711 A1 (Anmelderin: ZF Friedrichshafen AG; Anmeldetag: 23.12.2011) stellt mehrere Antriebsstränge vor, bei denen ein Verbrennungsmotor wahlweise auf den Antriebsstrang aufgeschaltet werden kann. Eine eine innere Welle umschließende Hülse dient dazu, einen von zwei Elektromaschinen an ein Stirnradgetriebe anzubinden. Eine zweite Elektromaschine ist an ein Planetengetriebe angebunden. Die Getriebe könnten auch dahingehend beschrieben werden, dass jede Elektromaschine ihre eigene Welle hat.

Die EP 1 247 679 B1 (Patentinhaberin: General Motors Corp.; Prioritätstag: 02.04.2001) kombiniert zwei Planetengetriebe mit zwei Motor/Generatoren. Über den Wirkungsgrad solcher Anordnungen macht die EP 1 247 679 B1 keine verlässlichen Angaben.

Darüber hinaus sind zahlreiche Ansätze und Aspekte zur Gestaltung eines Hybridantriebs in der DE 10 2013 112 388 A1 (Anmelderin: hofer forschungs- und entwicklungs GmbH; Anmeldetag: 11.11.2013) angesprochen. Das Dokument beschreibt einen Hybridantrieb mit einer Verbrennungskraftmaschine und verschiedenen Elektromaschinen, wobei die Verbrennungskraftmaschine durch eine Klauenkupplung auf ein nachfolgendes Getriebe aufschaltbar ist. Ein Leistungsfluss ist mithilfe eines Planetengetriebes steuerbar. Das Getriebe lässt sich in zwei unterschiedliche Teilgetriebe aufteilen.

Wie bereits zuvor angesprochen, lässt sich eine äußerst interessante Lösung eines Lastschaltgetriebes und einer Hybridanordnung mit Leistungsverzweigung den Ausführungsbeispielen der DE 10 2010 052 262 B4 (Patentinhaberin: Hofer-PDC GmbH; Anmeldetag: 23.11.2010) entnehmen. In einigen der Ausführungsbeispiele sind Anordnungen von Komponenten eines Antriebsstrangs gezeigt, bei denen mit zwei Elektromaschinen, die einem Stirnradgetriebe vorgeschaltet sind, unterschiedlichste Konfigurationen der Betriebsweise möglich sind.

Ein kompakter Aufbau dieses Antriebsstrangs wird u. a. dadurch ermöglicht, dass die zumindest zwei Elektromaschinen nebeneinander oder sogar ineinander verschachtelt angeordnet sind, von denen abtriebsseitig ein Stirnradgetriebe mit einer Vorgelegewelle kraftschlussmäßig wegführt.

Bei den Entwürfen geeigneter Getriebe ist aber auch ein Augenmerk auf die kuppelnden, die Schaltstellungen beeinflussenden Glieder zu legen.

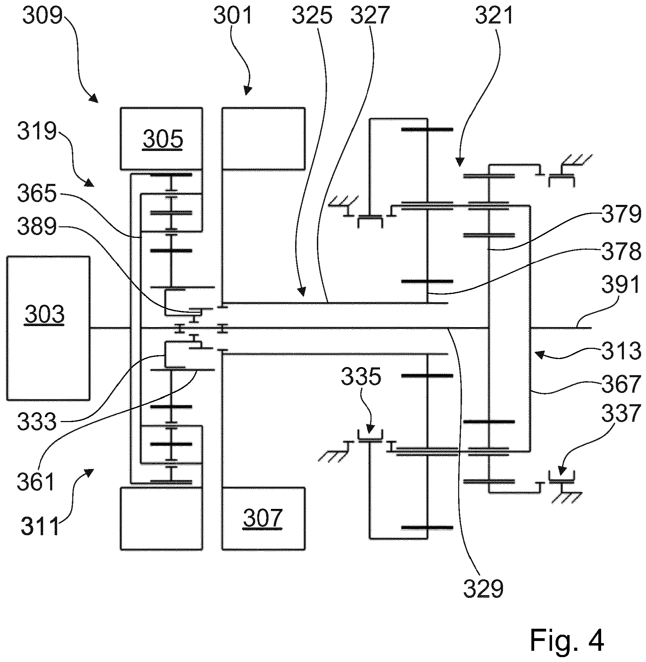

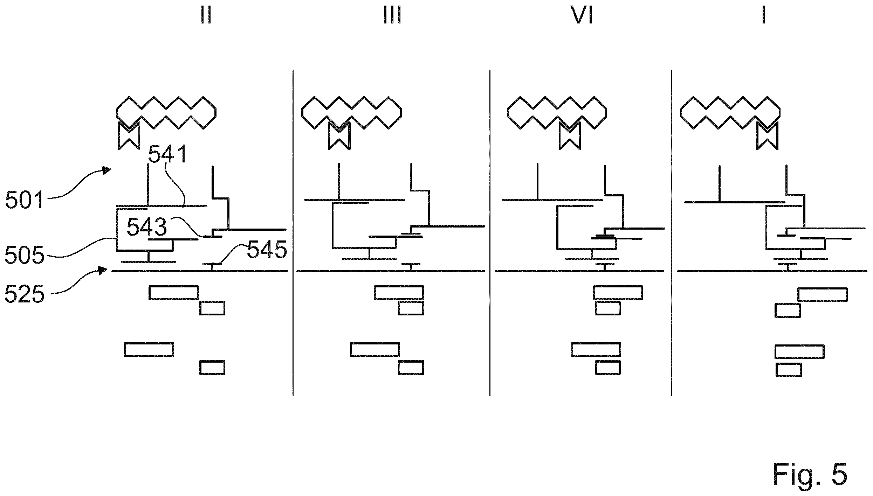

Die DE 10 2010 039 446 A1 (Anmelderin: ZF Friedrichshafen AG; Anmeldetag: 18.08.2010) stellt ein Klauenschaltelement durch die Figuren 4 und 5 vor, das mit einem verkürzten Schaltweg auskommen soll. Die Gegenüberstellung zeigt einen geringeren Schaltweg bei einem formschlüssigen Schaltelement aufgrund der verkürzten Überdeckungslängen, hervorgerufen durch die Zahnteilungen.

Mithilfe eines Kugel-Rampen-Mechanismus soll es laut DE 10 2004 015 569 A1 (Anmelderin: BorgWarner Inc.; Prioritätstag: 04.04.2003) möglich sein, Drehmomente unmittelbar von einem Planetenträger durch eine solche Schaltmuffe und durch miteinander in Eingriff stehenden Leisten auf eine primäre Abtriebswelle zu übertragen.

Eine Synchronisiereinrichtung mit mehreren Verbindungen wird in der DE 10 2004 055 903 A1 (Anmelderin: General Motors Corp.; Prioritätstag: 19.11.2003) vorgestellt, die ebenfalls mit einem Kugel-Rampen-Mechanismus ein festsetzen der Schaltmuffe in einer Schaltstellung sicherstellen soll. Das Augenmerk der Druckschrift liegt dabei ausschließlich auf der Schaltmuffe.

Die EP 1 925 486 A1 (Anmelderin: Volkswagen AG; Prioritätstag: 24.11.2006) schlägt vor, eine zweite Schiebemuffe mit einer ersten Schiebemuffe wirkverbunden zu realisieren, wodurch ein zweiteiliges Schiebemuffensystem entsteht, das eine Formschlusskupplung bilden kann. Dank einer solchen Anordnung sollen die Startzeiten eines Verbrennungsmotors eines Hybridantriebssystems nach einem Umschalten von einem Elektromaschinenantrieb verkürzbar sein.

Eine gänzlich andere zweiteilige Muffengestaltung kann der Figur 4 der DE 42 30 326 A1 (Anmelderin: Dana Corp.; Prioritätstag: 12.09.1991) entnommen werden, die als Schaltmuffe einer Doppel-Muffen-Ausbildung beschrieben wird und die eine federbelastete Tote-Gang-Verbindung umfasst.

Ebenfalls eine mehrteilige Muffengestaltung kann auch der WO 2006/117 493 A1 (Anmelderin: Peugeot Citroen Automobiles SA; Prioritätstag: 02.05.2005) entnommen werden.

Eine längsverschiebliche Kupplungsanordnung, mit der unterschiedliche eingerückte Zustände möglich sind, wird in der nach den Prioritätstagen veröffentlichten DE 10 2015 203 571 A1 (Anmelderin: ZF Friedrichshafen AG; Anmeldetag: 27.02.2015) beschrieben.

Die zuletzt genannten Dokumente erläutern die Vorteile einer Klauenmuffe. Wie aber im Endeffekt eine besonders günstige Klauenmuffe zu gestalten ist, lässt sich aufgrund des Variantenreichtums in der Schutzrechtsliteratur den vorgestellten Dokumenten nicht unmittelbar entnehmen.

In der DE 11 2008 001 553 T5 (Anmelderin: Toyota Jidosha Kaushiki Kaisha; Veröffentlichungstag: 24.12.2008) werden sogenannte Leistungsübertragungseinheiten beschrieben, die im Wesentlichen Hybridantriebe mit einer Verbrennungskraftmaschine und mit einem elektrisch betriebenen Motor-Generator sind. In einem am Ende der Figurenbeschreibung aufgeführten Ausführungsbeispiel gibt es zum einen eine Sperrkupplung, die in vier Positionen verschoben werden kann. Zum anderen gibt es in jenem Ausführungsbeispiel zwei Schaltkupplungen, durch die 4 Hauptmodi und zwei Zwischenschaltstufen, also insgesamt 6 Modi geschaltet werden können. Ziel sei ein stoßfreies Schalten. Hierzu bedarf es also eines Zusammenspiels von drei Kupplungen, die unabhängig voneinander betätigt werden müssen.

### Aufgabenstellung

Mitarbeiter der Patentinhaberin der DE 10 2010 052 262 B4 stellten sich die Frage, ob das zukunftsweisende Konzept der DE 10 2010 052 262 B4 Potential der Verbesserung aufweisen könnte. Ein solches Potential könnte in der Schaffung einer noch größeren Flexibilität liegen. Bauraumerfordernisse sind bei der Umsetzung des Konzepts der DE 10 2010 052 262 B4 als Antriebsstrang für ein konkretes Kraftfahrzeug zu beachten. Auch solche Anforderungen führen dazu, dass die erfinderische Lehre der DE 10 2010 052 262 B4 eine Anpassung erfordern könnte.

Es stellt sich also die Frage, ob an einer der Stellen in einem Getriebe, an denen eine Schaltklaue gem. der DE 10 2010 052 262 B4 propagiert wird, vorteilhafte Weiterentwicklungen vornehmbar sein könnten. Rudimentärer betrachtet lässt sich also eine Frage danach stellen, wie ein besonders vorteilhafter Klauenverbinder aussehen sollte.

### Erfindungsbeschreibung

Die erfindungsgemäße Aufgabe wird durch einen Hybridantrieb nach Anspruch 1 gelöst. Zur Lösung der erfindungsgemäßen Aufgabe trägt auch ein Verfahren zum Schalten eines Hybridantriebs nach Anspruch 18 bei. Vorteilhafte Weiterbildungen lassen sich den abhängigen Ansprüchen entnehmen.

Die vorliegende Erfindung beschäftigt sich mit der Ausgestaltung eines Hybridantriebs bzw. einem Antriebsstrang, der mit verschiedenen Antriebsmotoren, vorzugsweise unterschiedlicher Energietypen, ausgestattet ist. Ein solcher Hybridantrieb schafft die Möglichkeit, verschiedene Antriebsenergieträger zu nutzen. So kann z. B. ein Diesel-Elektro-Hybrid dank der vorliegenden Erfindung genauso ausgestaltet werden wie ein Autogas-Elektro-Hybridantrieb.

Die verschiedenen Antriebsquellen bzw. Antriebsmotoren sind über ein Getriebe miteinander verbunden. Das Getriebe mit seinen Schaltstellungen und Schaltvarianten ermöglicht es, den einen oder den anderen Antriebsmotor alleine oder auch in Kombination mit anderen Antriebsmotoren drehmomentmäßig direkt oder indirekt bzw. unmittelbar oder übersetzt auf die Abtriebsstraßenräder zu bringen, genauer, das Drehmoment und/oder die Leistung der Antriebsmotoren auf die Abtriebsstraßenräder weiterzuleiten.

Das Getriebe bietet die Möglichkeit, den Leistungsfluss durch das Getriebe zu verzweigen. Das bedeutet, nicht die gesamte Eingangsleistung aus einem Motor muss auf die Räder in allen Betriebszuständen übertragen werden, selbst wenn eine Durchschaltung auf die Räder vorliegt, sondern es kann auch zumindest ein Teil der Leistung aus dem Antriebsstrang ausgekoppelt werden und z. B. in Elektropuffern wie Akkumulatoren mit vorzugsweise Schnellladefähigkeiten (zwischen-)gespeichert werden. Die Leistung des Antriebsstrangs wird also in dem Getriebe verzweigt und ggf. an zwei oder drei verschiedene Maschinen oder Abtriebe ausgebracht.

Das Getriebe ist vorteilhafterweise auch lastschaltbar. Selbst unter Last können Schaltwechsel durchgeführt werden. Idealerweise findet keine Zugkraftunterbrechung aufgrund eines Schaltvorgangs statt. Obwohl keine gesonderten Lamellen- oder Reibkupplungen vorhanden sind, ist der Antriebsstrang in der Lage, zugkraftunterbrechungsfrei zwischen den verschiedenen Betriebsmodi hin- und herzuschalten. Genauso kann eine Gangwahl bzw. ein geänderter Gang eingelegt werden, ohne dass eine Zugkraftunterbrechung stattfindet.

Das Getriebe ist zumindest in einem funktionellen Sinne in Teilgetriebe unterteilt. Wird das Getriebe blockmäßig in Teilgetriebe unterteilt, bieten sich günstige Trenn- und Designlinien an. Ein schaltbares Getriebe ist das kraftfluss- und/oder momentenflussmäßig nachgeschaltete bzw. abtriebsseitig nähere Getriebe. Dies kann als zweites Teilgetriebe bezeichnet werden. Ein solches Getriebe kann z. B. ein Stirnradnebenwellengetriebe sein. Das Teilgetriebe hat eine gewisse Anzahl miteinander kämmender Stirnräder, vorzugsweise je zwei miteinander kämmende Stirnräder, die über Klauenmuffen kraftflussmäßig an eine ein Losrad tragende Welle oder an eine sonstige Verbindungswelle gekoppelt werden können. Neben einer Hauptwelle, die auch als Zentralwelle bezeichnet werden kann, gibt es zumindest eine Nebenwelle, eventuell auch mehrere Nebenwellen wie z. B. zwei Neben- bzw. Vorgelegewellen.

Von der Verbrennungskraftmaschine kommend vorgeordnet vor dem zweiten Teilgetriebe ist das erste Teilgetriebe, das ein Leistungsverzweigungsgetriebe ist. Die Kombination der beiden Teilgetriebe bietet zumindest eine Schaltstellung der Schaltelemente, in der der Kraftfluss von dem ersten Teilgetriebe in das zweite Teilgetriebe gelangt. Zumindest in dieser Schaltstellung ist das vorgeordnete Leistungsverzweigungsgetriebe ein Getriebe, das zumindest einen Teil der eingeleiteten Leistung an das Stirnradnebenwellengetriebe weiterleitet.

Leistungsverzweigungsgetriebe lassen sich in vielerlei Gestalt realisieren. Eine Möglichkeit besteht darin, Hydrostaten einzusetzen. Mechanisch besonders zuverlässig und kompakt sind Differentialgetriebe in Planetengetriebebauweise. Das Räderumlaufgetriebe arbeitet mit Differentialgeschwindigkeiten.

Werden Drehmomente und/oder Leistungen über zwei Rotationskörper des Differentialgetriebes eingeleitet, so kann mithilfe eines Abtriebs, der an einem weiteren Element des Differentialgetriebes angeschlossen ist, eine Differenzgeschwindigkeit, eine Differenzleistung oder ein Differenzdrehmoment abgeleitet werden.

Der Hybridantrieb kann seine Antriebsleistung aus drei verschiedenen Antriebsmotoren beziehen. Je nach Schaltkupplung zwischen den Teilgetrieben kann an unterschiedlichen Stellen des Differentialgetriebes ein Drehmoment und/oder eine Leistung eingeleitet werden. Die Flussrichtungen für Drehmoment und/oder Leistung durch das Getriebe variieren in Abhängigkeit von Verbindungen zwischen den Teilgetrieben und den Betriebszuständen der Kraftmaschinen. Zwei der Kraftmaschinen, von denen wenigstens eine, vorzugsweise beide, sowohl als Antriebsmotor als auch als elektrischer Generator betrieben werden können, sind drehbar und/oder rotationsfest mit einer Welle der wenigstens zwei Wellen umfassenden Zentralwelle in Verbindung. Mittelbar oder unmittelbar besteht eine Kopplung zwischen der Abtriebs- und/oder Antriebswelle der einen Kraftmaschine mit der einen Welle und der anderen Kraftmaschine mit der anderen Welle. Die beiden Wellen laufen koaxial in die gleiche Richtung, d. h. in das Innere des Stirnradnebenwellengetriebes. Die koaxiale Welle kann als Doppelwelle realisiert sein. Die beiden Einzelwellen der koaxialen Welle bilden zusammen die Doppelwelle. Eine Form der Ausgestaltung besteht darin, eine Hohlwelle zu haben, in deren Inneren - zumindest abschnittsweise - eine Innenwelle verläuft. Die Doppelwelle kann auch als Hohlwelle-Innenwelle-Kombination bzw. als Hohlwellen-Innenwellen-Paar bezeichnet werden.

Es gibt in dem Getriebe wenigstens ein Klauenschaltelement.

An der Übergangsstelle zwischen den beiden Teilgetrieben befindet sich das Klauenschaltelement. Das Klauenschaltelement kann verschiedene Schaltstellungen des Getriebes erzeugen. Mithilfe des Klauenschaltelements werden die beiden Teilgetriebe in unterschiedlicher Art und Weise miteinander verbunden. Besonders kompakt wird die Anbindung der beiden Teilgetriebe untereinander, wenn das Klauenschaltelement mehr als zwei Schaltstellungen aufweist, z. B. vier, fünf oder noch mehr Schaltstellungen. Eine Kraftflussverbindung wird zwischen einem der Rotationskörper des Leistungsverzweigungsgetriebes in einer Schaltstellung des Klauenschaltelements hergestellt mit einer der Wellen des zweiten Teilgetriebes, z. B. des Stirnradnebenwellengetriebes. Eine der Schaltstellungen stellt eine Kraftflussverbindung zwischen dem Sonnenrad des Leistungsverzweigungsgetriebes und der äußeren Welle dar.

Ein Verfahren zum Betrieb des Hybridantriebs basiert darauf, dass zwischen Schaltstellungen im Rahmen von Schaltabläufen gewechselt werden kann. Das Leistungsverzweigungsgetriebe kann z. B. ein solches Planetengetriebe sein, das verblockbar ist. Das zweite Teilgetriebe zeichnet sich u. a. durch seine Lastschaltbarkeit aus. Das Klauenschaltelement ist vorteilhafterweise muffenartig ausgestaltet und lässt sich vorzugsweise entlang der Achsen der beiden Wellen bewegen. Die Klauenmuffe als Teil des Klauenschaltelements kann wenigstens zwei Schaltstellungen einnehmen zwischen einem abtreibenden Rotationskörper des Leistungsverzweigungsgetriebes und wenigstens einer der Wellen der ineinander verlaufenden Doppelwelle, der koaxialen Zentralwelle. Durch eine Schub- oder Schiebebewegung kann z. B. so eine Klauenmuffe wechselweise geschaltet werden.

Das Klauenschaltelement, das besonders gut geeignet ist für den Einsatz in einem Hybridantrieb, kann z. B. an der Stelle in dem Getriebe eines hybridisierten Kraftfahrzeuges eingesetzt werden, der die Übergangsstelle zwischen einem ersten Teilgetriebe und einem zweiten Teilgetriebe darstellt. Für den Fahrkomfort wichtig ist ein möglichst synchronisiertes Ein- und Auskuppeln zur Herstellung und zur Unterbrechung von Kraft- und/oder Drehmomentflüssen.

Nachfolgend werden vorteilhafte Ausgestaltungen und Weiterbildungen dargelegt, die für sich gesehen, sowohl einzeln aus auch in Kombination, ebenfalls erfinderische Aspekte offenbaren können.

Setzt sich das Getriebe aus zwei Teilgetrieben zusammen, die mechanisch in unterschiedlichen Arten und Weisen an- und abgekoppelt werden können bzw. Teile aus den Getrieben miteinander, so können unterschiedlichste Schaltstellungen erreicht werden, d. h. ein Wechsel von einer Schaltstellung in die nächste Schaltstellung kann infolge eines Schaltablaufes erreicht werden.

Eine Komponente des Klauenschaltelements ist wenigstens eine erste Schiebemuffe.

Ein weiteres Teil des Klauenschaltelements ist ein zweites, schiebemuffenartiges Teil. Folglich hat das Klauenschaltelement wenigstens zwei Schiebeteile. Bauraumkompakt ist die Ausgestaltung der Schiebeteile als schiebemuffenartige Hülsen.

In einer bevorzugten Ausführung eines Schaltablaufs können Innen- und/oder Außenverzahnungen, insbesondere in der Form eines Zahnkranzes, an der Klauenmuffe durch eine Längsbewegung nacheinander mit Rotationskörpern des Leistungsverzweigungsgetriebes und/oder des schaltbaren Getriebes in Eingriff gebracht werden, sodass von einer ersten Betriebsart des Hybridantriebs in eine zweite Betriebsart des Hybridantriebs gewechselt werden kann.

Die Schiebemuffe umfasst wenigstens zwei Verzahnungen, z. B. in der Form eines Zahnkranzes. Durch die Verzahnung mit einer Gegenverzahnung ist ein Einspuren zweier rotierender Teile möglich. Die Verzahnungen befinden sich an unterschiedlichen Stellen auf Oberflächen der Schiebemuffe. Die Schiebemuffe ist hülsenartig. An der Hülse befinden sich an verschiedenen Stellen Verzahnungen, z. B. ganze Zahnkränze.

In einer bevorzugten Ausgestaltung ist in dem erfindungsgemäßen Hybridantrieb als eine weitere Antriebsmaschine eine Verbrennungskraftmaschine vorhanden.

Vorzugsweise ist kraftflussmäßig und/oder momentenflussmäßig wenigstens eine der beiden Kraftmaschinen zwischen der Verbrennungskraftmaschine und dem schaltbaren Getriebe angeordnet. Besonders bevorzugt ist deren Einkupplung in den Kraft- und/oder Momentfluss.

Bevorzugt wird eine Drehrichtungsumkehr im Vergleich mit einem Drehsinn einer aus der Verbrennungskraftmaschine herausführenden Welle dadurch ermöglicht, dass die zweite Kraftmaschine einen Vorwärts- und einen Rückwärtslauf zur Verfügung stellt. Dabei kann elektrische Energie zum Antrieb der zweiten Kraftmaschine aus einem Generatorbetrieb der ersten Kraftmaschine, die von einer von der Verbrennungskraftmaschine angetriebenen Welle gedreht wird, bezogen werden.

Das Differentialgetriebe kann eine Schaltstellung einer Drehrichtungsumkehr einnehmen, wodurch eine Drehrichtung einer von der Verbrennungskraftmaschine angetriebenen Welle umgekehrt werden kann.

Bevorzugt kann das Klauenschaltelement ein Kopplungsglied zwischen dem ersten Teilgetriebe und dem zweiten Teilgetriebe sein. Hierdurch ist zumindest in einer Schaltstellung eine Kraft- und/oder Momentflussstrecke von dem ersten Teilgetriebe auf das zweite Teilgetriebe herstellbar.

Bei einer weiteren Ausführung des Hybridantriebs ist die zweite Kraftmaschine an einer äußeren Welle der koaxialen Zentralwelle angebunden bzw. (zumindest indirekt) angebracht.

Die erste Kraftmaschine ist dagegen bevorzugt an einem Hohlrad des Differentialgetriebes angelängt.

Das Leistungsverzweigungsgetriebe kann ein zweistufiges Planetengetriebe sein, dessen Kraftflussrichtung vorzugsweise von dem Hohlrad über Planeten auf das Sonnenrad verläuft. Das Sonnenrad kann mit Hilfe des Klauenschaltelements an die Zentralwelle an- und abgekuppelt werden.

Bei dem eingesetzten Planetengetriebe kann die Kraft auch in Richtung von dem Hohlrad über Planeten auf Planetenträger fließen.

In einer weiteren Ausführung des Hybridantriebs kann das Klauenschaltelement so geschaltet werden, d. h. in solch eine Schaltstellung gebracht werden, in der ein Blockumlauf des Leistungsverzweigungsgetriebes, insbesondere des Differentialgetriebes, hergestellt ist.

Mit dem Klauenschaltelement ist eine wechselweise Aufschaltung eines abtreibenden Rotationskörpers des Leistungsverzweigungsgetriebes möglich. Der abtreibende Rotationskörper kann insbesondere Teil eines Planetengetriebes sein. Bevorzugt ist eine Komponente des Klauenschaltelements längsverschieblich, wobei vorzugsweise eine Muffe des Klauenschaltelements in Längsrichtung verschieblich gelagert ist.

Als schaltbares Getriebe, insbesondere als Stirnradnebenwellengetriebe, ist ein wenigstens zwei, vorzugsweise drei oder vier Klauenschaltelemente umfassendes Windungsgetriebe einsetzbar. In dem Getriebe liegt insbesondere die äußere Welle der Zentralwelle als zweiteilige Welle vor, wobei zumindest eine von zwei Teilwellen durch ein Klauenschaltelement schaltbar ist.

Das schaltbare Getriebe, insbesondere das Stirnradnebenwellengetriebe, kann solche Zahnradpaarungen aufweisen, die geometrische Stufungen in den Verhältnissen zwischen den Gängen schaffen.

In dem Hybridantrieb kann ein Klauenverbinder vorgesehen sein, der insbesondere Teil des Klauenschaltelements ist, welcher vier Schaltstellungen hat. Von diesen vier Schaltstellungen bewirkt insbesondere eine erste Schaltstellung eine Verblockung des Leistungsverzweigungsgetriebes, welches insbesondere ein Planetengetriebe ist. Eine zweite Schaltstellung bewirkt, vorzugsweise in einer Neutralstellung, einen ausschließlich elektrischen Antriebsmodus. Eine dritte Schaltstellung bewirkt einen kombinatorischen Antrieb durch die Verbrennungskraftmaschine und wenigstens eine der Kraftmaschinen. Schließlich bewirkt vorzugsweise eine vierte Schaltstellung eine Drehrichtungsumkehr eines Abtriebszahnrads des Stirnradnebenwellengetriebes.

In einer Ausführung des Hybridantriebs können beide, vorzugsweise in der Form von Elektromaschinen vorliegenden, Kraftmaschinen nebeneinander liegen, vorzugsweise in einer Wandler- und/oder Kupplungsglocke angeordnet, und sich zwischen der Verbrennungskraftmaschine und dem schaltbaren Getriebe befinden.

Das Getriebe, das seine Vorteile in einem Hybridantriebsstrang entfalten kann, umfasst zwei Teilgetriebe. Eines der Teilgetriebe ist ein Leistungsverzweigungsgetriebe. Ein Planetengetriebe kann als Leistungsverzweigungsgetriebe eingesetzt werden.

Ein Klauenschaltelement, das ohne Synchronisierung realisiert ist, also z. B. keine Synchronringe umfasst, ist besonders einfach aufgebaut. Das wenigstens eine Klauenschaltelement, das insbesondere unsynchronisiert arbeitet, hat wenigstens zwei Schiebeteile. Als Schiebeteile kommen z. B. schiebemuffenartige Hülsen infrage. Das Klauenschaltelement ist in mehrere Schaltstellungen bringbar.

Eine von den Schaltstellungen, in die das Klauenschaltelement gebracht werden kann, ist für eine Übertragung eines Drehmomentenflusses über das eine der beiden Schiebeteile gestaltet. Befindet sich das Klauenschaltelement in der Schaltstellung zur Übertragung eines Drehmomentenflusses, bildet sich eine Brücke zur Leistungsübertragung aus.

Während das Klauenschaltelement mit dem einen Schiebeteil in der Schaltstellung ist und auch dort verharrt, hat der andere Schiebeteil wenigstens einen Freiheitsgrad. Trotz der brückenartigen Verbindung über das eine Schiebeteil, kann das andere Schiebeteil bewegt werden. Hierdurch kann eine lastfreie Einnahme einer anderen Schaltstellung des zweiten Schiebeteils erreicht werden. Der Teil des Klauenschaltelements, der noch zu bewegen ist, erfährt während der Bewegung noch keine Lastübertragung. Sind zwei Schiebeteile vorhanden, so ist der zweite Schiebeteil lastfrei, während über den ersten Schiebeteil schon eine Last übertragbar ist bzw. sogar übertragen wird. Das Klauenschaltelement ist in eine zweite Schaltstellung bringbar. In dieser zweiten Schaltstellung ist das zweite Schiebeteil zur Übernahme eines zweiten Drehmomentenflusses ausgestaltet.

Ein zentrales Element zur Herstellung der unterschiedlichen Schaltstellungen ist die Baugruppe Klauenverbinder. Der Klauenverbinder kann in einem zuvor dargelegten Getriebe verbaut werden.

Der Klauenverbinder ist mehrteilig. Der Klauenverbinder kann z. B. ein erstes hülsenartiges Teil und ein zweites hülsenartiges Teil umfassen. Der Klauenverbinder ist - in diesem Fall - aus mehreren Hülsen aufgebaut. Die Hülsen sind zumindest in einigen Positionen bzw. Schaltstellungen, in denen sich der Klauenverbinder befinden kann, zueinander verschieblich. Die Teile des Klauenverbinders nehmen Positionen ein. Die Relativbeziehungen der Teile sind veränderlich, z. B. übereinander stülpbar bzw. mit veränderlichen Eintrittstiefen. Die Teile sind in zueinander veränderbaren Relativpositionen verbringbar. Es können verschiedene Relativpositionen, idealerweise stufenlos, eingenommen werden.

Der eine Teil, insbesondere eine erste Schiebemuffe, des Klauenverbinders ist in einer Position arretierbar. Der Teil befindet sich z. B. in einer arretierten Stellung. Zugleich bleibt eine Bewegungsmöglichkeit für den anderen Teil, insbesondere wenn dieser eine zweite Schiebemuffe ist, erhalten. Der Klauenverbinder bietet eine Bewegungsstrecke für den zweiten Teil, während der erste Teil arretiert ist. Die Schiebemuffe bietet längsbewegliche Bewegungsmöglichkeiten. Wird der mögliche Weg der Bewegung zurückgelegt, kann durch den Klauenverbinder eine Schaltstellung eingenommen werden. Die weitere Schaltstellung ist einnehmbar.

Hierdurch ist u. a. eine lastfreie Schaltung bzw. ein Schaltwechsel möglich. Es kann, ohne dass Last über eines der beiden Schiebeteile übertragen wird, das entsprechende Schiebeteil in eine Schaltstellung verschoben werden. Eines der Schiebeteile ist lastfrei, obwohl ein anderes Schiebeteil eine Drehmomentübertragung in genau der gleichen Schaltstellung vornimmt.

In einer vorteilhaften Weiterbildung hat das Getriebe wenigstens ein erstes Klauenschaltelement. Das wenigstens eine vorhandene, erfindungsgemäße Klauenschaltelement übernimmt Brückenaufgaben. Es ist ein Brückenelement. Es stellt die Verbindung zwischen dem ersten Teilgetriebe und dem zweiten Teilgetriebe her. Es gibt zumindest eine Schaltstellung, in der das Klauenschaltelement eine Kraftflussverbindung zwischen den Teilgetrieben herstellen kann. In Abhängigkeit der Schaltstellungen des Klauenschaltelements ist eine Kraftflussverbindung zwischen den Teilgetrieben herstellbar.

An Stelle des ersten Klauenschaltelements oder sogar zusätzlich zu dem ersten Klauenschaltelement kann in dem Getriebe ein zweites Klauenschaltelement verbaut sein. Das wenigstens eine Klauenschaltelement ist in diesem Fall ein Kopplungselement innerhalb des zweiten Teilgetriebes.

Besonders vorteilhaft ist es, wenn das Getriebe so ausgelegt ist, dass in einer Schaltstellung ein Verblocken des Leistungsverzweigungsgetriebes eingetreten ist. In einer Schaltstellung, insbesondere durch das erste Klauenschaltelement, wird eine Verblockung des ersten Teilgetriebes hergestellt.

Das Getriebe greift u. a. auf das Klauenschaltelement zurück, um Schaltzustände für einen Hybridantrieb über das Getriebe herzustellen. Wenn sich das Klauenschaltelement in einem Schaltzustand befindet, in dem ein brückender Hybridzustand zwischen dem ersten Teilgetriebe und dem zweiten Teilgetriebe gegeben ist, verbleibt trotzdem eine lastfreie Bewegung eines Teils des Klauenschaltelements. Eine lastfreie Bewegung eines Teils des Klauenschaltelements steht zur Verfügung. Die Bewegung kann entlang eines Bewegungsweges zurückgelegt werden. Wird der Bewegungsweg zurückgelegt, erfolgt eine Hinzunahme einer Formschlussverbindung. Es wird eine weitere Formschlussverbindung hergestellt. Die Formschlussverbindung ist darauf abgestimmt, dass ein verblockender Zustand des ersten Getriebes eingenommen wird.

Das Getriebe kann in einer günstigen Weiterbildung mit einem solchen Klauenschaltelement aufgebaut werden, das eine übereinander liegende Doppelschiebemuffenstruktur aufweist.

Vorteilhaft ist es, wenn die Schiebeteile in wenigstens einer Position bzw. in wenigstens einem Relativbereich zueinander eine Kopplung herstellen können. Zwischen den Schiebeteilen gibt es eine Kugelkoppelung. Eine Möglichkeit der Ausbildung der Kugelkoppelung besteht darin, durch eine in einem Käfig geführten Kugel, die in einer Position in eine Nut eingreifen kann, die Verbindung zwischen den Schiebeteilen herzustellen.

Das Getriebe kann für die Formschlussteile Begrenzungen aufweisen. So ist es möglich, wenigstens eines der Schiebeteile durch einen Anschlag in seinem Bewegungsweg bzw. in seinem Freiheitsgrad zu begrenzen. Wird der Anschlag an einem Führungsteil angebracht, das das Formschlussteil entlang eines Bewegungsweges führt, ist eine vorteilhafte Ausgestaltung geschaffen. So kann das Formschlussteil an einem Auswandern in Längsrichtung gehindert werden. Als Formschlussteil kann z. B. das Schiebeteil mit einem Zahnkranz ausgebildet werden, der für einen formschlüssigen Eingriff in ein Gegenelement ausgestaltet ist.

In einer günstigen Weiterbildung hat das Getriebe aber nicht nur ein einziges Formschlussteil, sondern die Schiebeteile bieten Mittel, sodass in zumindest einer Schaltstellung wenigstens zwei formschlüssige Verbindungen hergestellt sind.

In einer Ausgestaltung des Gedankens, mehr als eine formschlüssige Verbindung an einem Klauenschaltelement in dem Getriebe auszubilden, kann zwischen einem Zahnkranz eines Schiebeteils und einem Rotationskörper, der zu einem Teilgetriebe gehört, wie ein Sonnenrad, wie eine Welle, z. B. einer äußeren Welle oder einer inneren Welle, oder wie ein Hub, eine formschlüssige Verbindung ausgebildet werden. Daneben kann eine zweite formschlüssige Verbindung, z. B. ebenfalls zu einem anderen der oben aufgezählten Rotationskörper, hergestellt werden.

Das Getriebe kann z. B. eine koaxiale Doppelwelle umfassen. Die äußere Welle kann z. B. mit einer Durchbrechung ausgestattet sein. Die äußere Welle kann zudem in einem Wellenabschnitt von der inneren Welle abgesetzt sein. Die äußere Welle weist - in diesem Fall - eine Durchbrechung auf, die sich nicht unmittelbar an die innere Welle anschließt. Diese Durchbrechung kann für Führungselemente bzw. eine Zugänglichmachung genutzt werden. So ein Führungselement wie eine Schaltgabel mit Pads lässt sich z. B. durch die äußere Welle durchführen. Mithilfe des Führungselements kann eine Schubbewegung an eines der Schiebeteile eingeleitet werden.

Die Schiebeteile und die übrigen Bauteile, die zusammen einen Klauenverbinder ergeben, sind für eine Kraft- und/oder eine Drehmomentübertragung gedacht. Der Klauenverbinder umfasst das Klauenschaltelement.

Der Klauenverbinder ist dafür ausgebildet, zwischen krafteinleitenden Elementen und schubbeweglichen Teilen des Klauenverbinders einen Eingriff herzustellen. In einer alternativen oder zusätzlichen Ausgestaltung kann der Klauenverbinder auch so gestaltet sein, dass zwischen kraftausleitenden Elementen und schubbeweglichen Teilen des Klauenverbinders Verzahnungen für einen gegenseitigen Eingriff ausgebildet sind. Mithilfe von Verzahnungen können günstige formschlüssige Verbindungen zwischen den einzelnen Teilen des Klauenverbinders hergestellt werden.

Vorteilhaft ist es, wenn der Klauenverbinder ein Teil hat, das als mitschleppendes Teil eines anderen Teils des Klauenverbinders gestaltet ist. Während das eine Teil eine Wegstrecke zurücklegt, kann das andere Teil mitgeführt werden. Z. B. während eines Schaltwechsels kann das Mitführen des zweiten Teils durch das eine Teil beide Teile wie z. B. die Schiebeteile in zueinander abgestimmte Positionen bringen.

Der Klauenverbinder sollte in einer günstigen Weiterbildung eine Arretierung aufweisen, die vorteilhafterweise zwischen dem einen Teil und dem anderen Teil des Klauenverbinders seine Wirkung entfaltet. Eine Arretierung kann z. B. mittels Kugelkoppelung hergestellt werden. So eine Kugelkoppelung ist z. B. durch Eingriff einer Kugel in eine angefaste Nut bildbar. Anstelle einer angefasten Nut kann auch eine Nut, die eine Steigung zu ihren Randbereichen hin aufweist, in das die Arretierungskugel aufnehmende, insbesondere verschiebliche Teil eingearbeitet sein. Besonders günstig ist ein Nutverlauf, der mit stetigen Steigungen zu den Rändern der Nut hin abflachend ausläuft.

Der Klauenverbinder kann zudem mit einem Kugelkäfig ausgestattet sein. Die Kugelkoppelung kann einen Kugelkäfig umfassen, der in dem Teil eingeformt ist, der im Vergleich mit dem anderen Teil das weiter außen liegende Teil darstellt. In einer weiteren Ausgestaltung kann der Kugelkäfig in das Teil eingeformt sein, der ein mittleres Teil in dem schichtartigen Aufbau bzw. dem zylindrischen Aufbau darstellt. Idealerweise ist der Kugelkäfig in dem Teil angeordnet, der zumindest eine Verschiebungsstrecke zurücklegen kann. Der Kugelkäfig kann z. B. in eines der Schiebeteile eingearbeitet sein.

Die Bewegungswege der Schiebeteile können z. B. in axialer Richtung vorgesehen sein. Die Zuverlässigkeit des Klauenverbinders wird gesteigert, wenn eine Veränderung in einem Zustand einer Arretierung, z. B. von arretiert in nicht arretiert oder von freilaufend in arretiert, durch eine radiale Bewegung eines Arretierkörpers herbeiführbar ist.

Zur leichteren Einordnung der vorliegenden Erfindung werden nachfolgend noch weitere Aspekte vorgestellt.

Die Stirnseite der Zähne, die Seite, die einen Betrachter anschaut, wenn der Betrachter seitlich in die Hülse der Schiebemuffe hineinschaut, kann als Dach bezeichnet werden. Ein weiteres Dach jedes einzelnen Zahns ist die Seite eines Zahns, die eine Extremität des Zahns darstellt.

Obwohl die Zähne an jener Seite in einer Ausgestaltung glatt und insbesondere ungewinkelt ausgeführt sein können, ist eine Synchronisierung von Rotationskörpern der Teilgetriebe, die über das Klauenschaltelement gekoppelt werden, möglich.

Die Rotationskörper, die den Teilgetrieben zugerechnet werden können, stellen Gegenelemente für die (jeweilige) Schiebemuffe, genauer für die Verzahnungen der Schiebemuffe(n) dar.

Auf der Schiebemuffe sind Schaltstellungen dadurch ausgebildet, dass sich Zahnpositionen entlang der Oberfläche befinden. Zwischen einzelnen Zahnpositionen, insbesondere Zahnkränzen, gibt es ggf. Freiflächen, die auch als Freistiche bezeichnet werden können.

Die Bewegung der Schiebemuffen kann über eine Führung ausgeübt werden, zu der eine Schaltwalze gehört. Die Schaltwalze kann z. B. mit einer Führungsnut ausgebildet sein, die eine Kulisse für die Schaltbewegung darstellt. So können die Schaltstellungen durch das Verdrehen von Servomotoren oder durch hydraulische Motoren eingenommen werden, die eine jeweilige Schaltwalze um ihre Achse winkelgradweise verstellen können.

Mehrere Schiebemuffen können zu einem Klauenschaltelement zusammengefasst werden.

Die Schiebemuffen und auch noch weitere Teile der Klauenschaltelemente können aus Blech hergestellt werden. Besonders vorteilhaft ist es, wenn die Schiebemuffen blechumgeformte Körper sind, die aus Flachblechen hergestellt sind.

Ein Gangspringen wird z. B. dadurch vermieden, dass neben den Verzahnungen noch weitere Arretierungen wie z. B. laterale Verzahnungen vorgesehen sind. Eine Maßnahme zur Förderung und zum Beibehalten der gewählten Schaltstellung ist die Anordnung von Hinterlegungen. An Verzahnungen, die sich wahlweise an der Schiebemuffe und/oder an den Gegenelementen der Verzahnungen der Schiebemuffe befinden können, sind Bereiche bzw. Abschnitte mit Hinterlegungen ausgebildet. Durch die Hinterlegungen werden die Zähne der Verzahnungen an einem Ausspuren gehemmt.

Der erfindungsgemäße Klauenverbinder ist ein statisch vollständig bestimmtes System. Sollen Schaltwechsel vorgenommen werden, d. h., wird ein Wechsel von einer Schaltstellung in eine zweite Schaltstellung unternommen, so hat sich der Antrieb der Klauenmuffe nur um die Massenträgheit der zu verschiebenden Teile der Klauenmuffe zu kümmern. Das Konzept Hülse in Hülse führt zu einer sehr geringen Masse, die zu bewegen ist. Dementsprechend sind die Massenträgheiten ebenfalls gering, was zu einem energetisch vorteilhaften Schaltsystem führt.

Die vorliegende Erfindung behandelt die sich immer stärker ergebende, im Zuge der zunehmenden Triebstrangelektrifizierung und Integration von Elektromotoren und Getrieben sich ausbildende Anforderung, mit möglichst wenig Zahnradpaarungen eine möglichst sinnvolle Gangzahl sowohl für den elektrischen Betrieb, für den Betrieb der Verbrennungskraftmaschine (Verbrennerbetrieb) und auch für einen Kombibetrieb abzubilden. Hierzu werden beispielsweise Windungen in dem Getriebe und Mehrfachnutzungen von Zahnrädern und Zahnradpaaren eingesetzt. Eine Reduzierung der Zahnräder macht jedoch eine aufwendigere Aktuatorik erforderlich. Nicht nur hierfür, sondern auch für sonstige Schaltvorgänge werden Schaltelemente mit mehr als den Schaltstellungen "links" / "neutral" / "rechts" benötigt. Eine gelöste Herausforderung ist hierbei insbesondere die Kombination von sicherer Ganghaltung durch Hinterlegung in allen geschalteten Gängen und die Schaltbarkeit eines neuen Ganges, während ein erster Gang im Momentenfluss durch die Hinterlegung "festgesetzt" ist. Diese Aufgabenstellung in Kombination mit verschiedenen Schaltelementeanzahlen und verschiedenen Anordnungen der Aktuatorik wird durch vorliegende Erfindung gelöst. Unabhängig von einer Elektrifizierung können diese Schaltelemente genauso in Wandlerautomatengetrieben, Doppelkupplungsgetrieben oder ähnlichen Anwendungen zum Einsatz kommen.

Das erste Klauenschaltelement kann dem Leistungsverzweigungsgetriebe zugeordnet bzw. zugerechnet werden. Durch die Einnahme einer Schaltstellung kann ein bestimmter Betriebsmodus des Hybridantriebs eingenommen werden. Durch die Einnahme einer weiteren Schaltstellung kann ein anderer, bestimmter Betriebsmodus des Hybridantriebs eingenommen werden. Das Klauenschaltelement befindet sich im Leistungsfluss, insbesondere der Leistung, die von der Verbrennungskraftmaschine kommt. Das Klauenschaltelement kann Verbindungen zu beiden Wellen der koaxialen Zentralwelle, insbesondere in Abhängigkeit seiner Schaltstellung, aufbauen.

Das Leistungsverzweigungsgetriebe setzt sich, insbesondere wenn es als Planetengetriebe realisiert ist, aus den funktional bestimmten Wellen Summenwelle, erste Differenzwelle und zweite Differenzwelle zusammen. Das Planetengetriebe umfasst somit wenigstens drei Wellen. Eine der Elektromaschinen ist an einer der Differenzwellen angebunden. Eine andere Elektromaschine ist an einer anderen Differenzwelle angebunden. Die Verbrennungskraftmaschine ist auf die Summenwelle des Leistungsverzweigungsgetriebes geführt.

Jede der wenigstens zwei Elektromaschinen, also beide Elektromaschinen sind mit einer der Wellen der Zentralwelle verbindbar.

Das Klauenschaltelement bietet bzw. übernimmt wenigstens zwei Funktionen. Das Klauenschaltelement kann eine Verbindung zwischen den beiden Differenzwellen herstellen. Das Klauenschaltelement kann eine Verbindung zwischen einer Differenzwelle und der Zentralwelle herstellen.

Besonders vorteilhaft ist es, wenn das Sonnenrad des Planetengetriebes als Differenzwelle genutzt wird. Das Sonnenrad ist eine der Differenzwellen. Diese Differenzwelle ist von der Zentralwelle abkoppelbar. Diese Differenzwelle kann in einen neutralen Betriebsmodus gebracht werden.

Die zuvor beschriebenen Antriebsstränge bzw. Hybridantriebe sind in der Lage, leistungsführend zu schalten. Obwohl über das Klauenschaltelement eine Leistung geführt wird, kann mittels des Klauenschaltelements ein anderer Betriebsmodus eingeschaltet werden. Unter Last können Betriebsmodi verändert werden. Während Leistung über das Klauenschaltelement geführt wird, kann der Schaltzustand des Klauenschaltelements verändert werden.

Die zuvor dargestellten Kombinationen und Ausführungsbeispiele lassen sich auch in zahlreichen weiteren Verbindungen und Kombinationen betrachten.

So können z. B. verschiedene, zuvor dargestellte Typen von Klauenverbinder in einem Getriebe verbaut werden.

Hierbei muss nicht jeder Klauenverbinder vollkommen identisch zu den anderen Klauenverbindern des Getriebes realisiert sein. Es kann auch eine solche Ausgestaltung gewählt werden, in der der eine Klauenverbinder mit nur drei Schaltstellungen auskommt, z. B. den drei Schaltstellungen "links" / "neutral" / "rechts", während der andere Klauenverbinder fünf Schaltstellungen benötigt.

Zur Vereinfachung der Erläuterung der vorliegenden Erfindung wurde einheitlich von einem Leistungsverzweigungsgetriebe eingangsseitig berichtet. Die vorgestellten Anordnungen der Antriebsmotoren und -quellen sind so arrangiert, dass das Leistungsverzweigungsgetriebe drehmomentmäßig nach der Verbrennungskraftmaschine angeordnet ist.

Einem Fachmann ist klar, dass die vorgestellten Teilgetriebe auch miteinander getauscht und sogar durch ähnliche Teilgetriebe substituiert werden können, ohne vom Gegenstand der vorliegenden Erfindung abzuweichen.

### Figurenkurzbeschreibung

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei
Figur 1 eine erste Ausführungsform eines Antriebs bzw. eines Antriebsstrangs in schematischer Darstellung mit üblichen, von Getriebekonstrukteuren verwendeten Symbolen zeigt,
Figur 2 eine zweite Ausführungsform eines Antriebs bzw. Antriebsstrangs in schematischer Darstellung zeigt, die ähnlich zu Figur 1 ist,
Figur 3 eine dritte Ausgestaltungsform eines Antriebs zeigt, die ähnlich zu den Figuren 1 und 2 ist,
Figur 4 eine vierte Ausgestaltungsform eines Antriebs bzw. Antriebsstrangs zeigt, die den Figuren 1 bis 3 funktionell ähnelt,
Figur 5 eine weitere Ausgestaltung eines geeigneten Schaltelements, ähnlich zu den Schaltelementen in den Figuren 1 und 4, offenbart,
Figur 6 eine geeignete Schiebemuffe als Teil des Schaltelements, z. B. nach Figur 5, zeigt,
Figur 7 eine Baugruppe mit mehreren Schiebemuffen und mehreren, die Schiebemuffen steuernden Elementen zeigt,
Figuren 8 bis 10 eine Ausführungsform einer mehrteiligen Klauenmuffe in verschiedenen Schaltstellungen mit einer Einkugellösung zeigt,
Figuren 11 bis 13 eine weitere Ausführungsform einer mehrteiligen Klauenmuffe in verschiedenen Schaltstellungen mit einer Zweikugellösung zeigt,
Figuren 14 und 15 eine weitere Ausführungsform einer mehrteiligen Klauenmuffe in verschiedenen Schaltstellungen mit einer Einkugellösung zeigt,
Figuren 16 bis 18 eine weitere Ausführungsform einer mehrteiligen Klauenmuffe in verschiedenen Schaltstellungen mit einer Zweikugellösung zeigt und
Figuren 19 bis 21 eine weitere Ausführungsform einer mehrteiligen Klauenmuffe in verschiedenen Schaltstellungen mit einer Zweikugellösung zeigt.

### Figurenbeschreibung

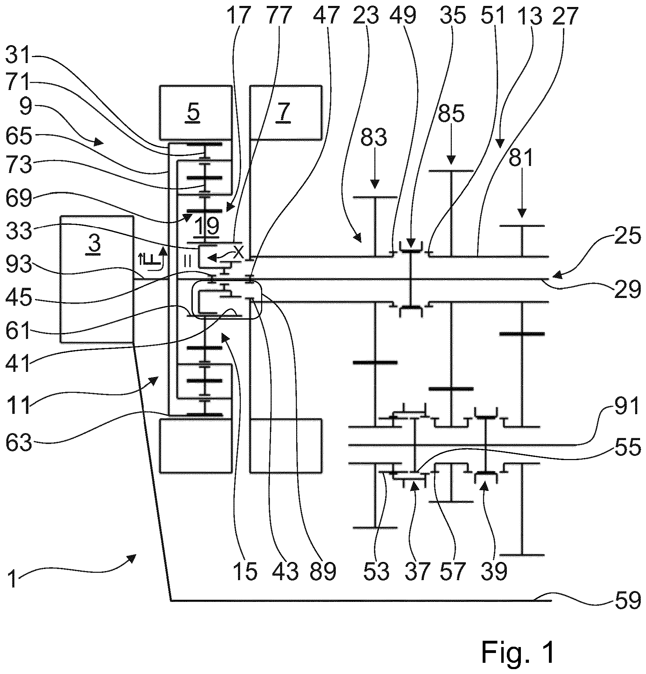

Figur 1 zeigt mit Symbolen, die Getriebeentwicklern geläufig sind, einen ersten Antrieb 1. Der Antrieb 1 umfasst eine Verbrennungskraftmaschine 3 als erste Antriebsquelle. Darüber hinaus hat der Antrieb 1 eine erste Elektromaschine 5 und eine zweite Elektromaschine 7. Die beiden Elektromaschinen 5, 7 stellen ebenfalls Antriebsquellen bzw. Kraft- und Drehmomentmaschinen dar. Aufgrund der unterschiedlichen Antriebsmaschinen, die aber auch im Falle der Elektromaschinen 5, 7 als Generatoren betrieben werden können, wird der Antrieb 1 als Hybridantrieb bezeichnet.

Die Antriebsmaschinen wie die Verbrennungskraftmaschine 3 und die Elektromaschinen 5, 7 sind über das Getriebe 9 miteinander verbunden. Das Getriebe 9 ermöglicht es, dass die einzelnen Antriebsmaschinen rotieren können. Die Rotation einer Antriebsmaschine kann sich - je nach Schaltstellung des Getriebes 9 - auf die anderen Antriebsmaschinen auswirken.

Das Getriebe 9 lässt sich wenigstens im funktionellen Sinne in zwei Teilgetriebe 11, 13 unterteilen. Das erste Teilgetriebe 11 kann die Aufgabe eines Leistungsverzweigungsgetriebes 15 übernehmen. Dazu ist das erste Teilgetriebe 11 als Differentialgetriebe 17 ausgebildet. So wie in Figur 1 dargestellt, lässt sich ein Differentialgetriebe 17 günstig durch ein Planetengetriebe 19 realisieren.

Das zweite Teilgetriebe 13 ist ein Stirnradnebenwellengetriebe 23. In dem Stirnradnebenwellengetriebe 23 gibt es einzelne Stirnräder, die zu Zahnradpaarungen 81, 83, 85 zusammengesetzt sind. Eines der Stirnräder einer Zahnradpaarung lagert, insbesondere als Losrad, auf einer Nebenwelle. Die Nebenwelle ist zugleich Abtriebselement 91, d. h. die Nebenwelle ist die Abtriebswelle. Das Stirnradnebenwellengetriebe 23 zentert um die Zentralwelle 25. Die Zentralwelle 25 umfasst die äußere Welle 27 und die innere Welle 29. Die äußere Welle 27 und die innere Welle 29 sind - zumindest in einem Teil - koaxial verlaufende Wellen 27, 29, die zusammen die doppelt ausgeführte Zentralwelle 25 bilden.

In dem Stirnradnebenwellengetriebe 23 gibt es Schaltelemente, wie das zweite Schaltelement 35, das dritte Schaltelement 37 und das vierte Schaltelement 39. Die Schaltelemente 33, 35, 37, 39 sind als Klauenschaltelemente mit Zahnungen bzw. Zahnringen auf einer Innenseite oder einer Außenseite der muffenartigen bzw. hülsenartigen, insbesondere länglichen Form ausgestaltet. Für die Schaltelemente 33, 35, 37, 39 gibt es Gegenzahnungen 41, 43, 45, 47, 49, 51, 53, 55, 57 an den zu dem jeweiligen Schaltelement 33, 35, 37, 39 korrespondierenden Bauteil.

Das erste Teilgetriebe 11 und das zweite Teilgetriebe 13 sind unter einem Gehäuse angeordnet, das als Wandlerglocke 59 beschrieben werden kann.

Das erste Teilgetriebe 11 hat einen ersten Rotationskörper 31 und einen zweiten Rotationskörper 61. Die Kraft F bzw. der gerichtete Kraftfluss *̅F̅*̅ (F_{Vektor}) wird in einem Antriebsmodus von der Verbrennungskraftmaschine 3 auf den ersten Rotationskörper 31 geführt, um von dort über Planeten 69 auf Planetenträgern 65 zu dem zweiten Rotationskörper 61 zu gelangen. Im Falle einer Leistungsverzweigung erfolgt der Abtrieb über den Rotationskörper 61 genauso wie über den Planetenträger 65. Die Verbrennungskraftmaschine 3 ist über eine Motorwelle 93 mit dem Hohlrad 63 des Planetengetriebes 19 mechanisch fest gekoppelt. Das Planetengetriebe 19 ist ein Planetengetriebe, das zwei unterschiedliche Radsatzpaarungen hat. Das Hohlrad 63 kämmt mit den Zähnen eines ersten Planetensatzes 71. Die Zähne des ersten Planetensatzes 71 kämmen mit den Zähnen der Zahnräder eines zweiten Planetensatzes 73. Ein derartiges Planetengetriebe 19 kann auch als zweistufiges Planetengetriebe oder als zweifaches Planetengetriebe bezeichnet werden. Über die einzelnen Planetensatzstufen des ersten Planetensatzes 71 und des zweiten Planetensatzes 73 kann ein Drehmoment von dem Hohlrad 63 zu dem hohlen Sonnenrad 77 gelangen. Genauso kann ein Drehmoment über den Planetenträger 65 ausgeleitet werden.

Aufgrund des Klauenverbinders 89, der vier Schaltstufen I bis IV aufweist, von denen die zweite Schaltstufe II in Figur 1 zu sehen ist, können die unterschiedlichen Antriebsquellen über das Planetengetriebe 19 durchgeschaltet werden.

### Mögliche Schaltstellungen der Schaltelemente 33 (Klaue 1 - K1), 35 (Klaue 2 - K2), 37 (Klaue 3 - K3), 39 (Klaue 4 - K4) zeigt die nachfolgende Tabelle:

| | | 33 - K1 | | | | 35 - K2 | | | 37 - K3 | | | 39 - K4 | | |
|---|---|---|---|---|---|---|---|---|---|---|---|---|---|---|
| Gang | | I (links) | II neutral | III (rechts 1) | IV (rechts 2) | I^{I} (links) | II^{I} neutral | III^{I} (rechts) | I^{II} (links) | II^{II} neutral | III^{II} (rechts) | I^{III} (links) | II^{III} neutral | III^{III} (rechts) |
| | **Anfahren** | | | | | | | | | | | | | |
| 1 | | | | x | | | x | | | | x | | | x |

| **Hybrid** | | | | | | | | | | | | | | |
|---|---|---|---|---|---|---|---|---|---|---|---|---|---|---|
| 1 | | | | | x | | x | | | | x | | | x |
| 2 | | | | x | | | | x | | | x | | | x |
| 3 | | | | | x | | | x | | x | | | | x |
| 4 | | | | x | | | | x | x | | | | | x |
| 5 | | | | | x | | | x | x | | | | x | |
| 6 | | | | x | | | | x | x | | | x | | |
| 7 | | | | | x | | | x | | x | | x | | |
| R | | x | | | | | x | | | | x | | | x |

| **E-Drive** | | | | | | | | | | | | | | |
|---|---|---|---|---|---|---|---|---|---|---|---|---|---|---|
| 1+ | | | x | | | x | | | | | x | | | x |
| 1 | | | x | | | | | x | | | x | | | x |
| 2 | | | x | | | | | x | x | | | | | x |
| 3 | | | x | | | | | x | x | | | x | | |

Die Verbrennungskraftmaschine 3 dreht über die Motorwelle 93 und ihren Anschluss an das Hohlrad 63 dieses unmittelbar und übersetzungsfrei. Die erste Elektromaschine 5 ist mechanisch fest mit dem Planetenträger 65 verbunden. Der Planetenträger 65 mündet in die innere Welle 29. Die erste Elektromaschine 5 kann so unmittelbar und direkt die innere Welle 29 antreiben. Die äußere Welle 27, die tatsächlich eine in zwei Teile unterteilte äußere Welle ist, steht in unmittelbarer Verbindung mit der zweiten Elektromaschine 7. Der Klauenverbinder 89 kann je nach Schaltstellung Verbindungen zwischen den Antriebsmaschinen und den mit diesen verbundenen Komponenten des Differentialgetriebes 17 herstellen.

In der in Figur 1 dargestellten Schaltstellung II befindet sich der Schaltmuffenteil des Klauenverbinders 89 nur mit dem Sonnenrad 77 im Eingriff. Es existiert keine Verbindung zwischen dem Planetenträger 65 bzw. der inneren Welle 29 und sonstigen Gegenzahnungen 43, 45, 47 des Klauenverbinders 89. Das Sonnenrad 77 ist frei drehbar. Die Getriebeübersetzung des Getriebes 9 ergibt sich aus der gewählten Zahnradpaarung 81, 83, 85 in dem zweiten Teilgetriebe 13. Der Antrieb 1 befindet sich in einem rein elektromotorischen Antriebszustand.

Wandert die Schiebemuffe des Klauenverbinders 89 in die linke Stellung, also in die Schaltstellung I, z. B. aus der Schaltstellung II, ergibt sich eine Verbindung zwischen dem Sonnenrad 77 und der inneren Welle 29. Die Verbrennungskraftmaschine 3 befindet sich in einer Verbindung X mit der ersten Elektromaschine 5. Es bietet sich die Möglichkeit, z. B. einen seriellen Hybridantrieb zu realisieren. Bei diesem seriellen Hybridantrieb treibt die Verbrennungskraftmaschine 3 die erste Elektromaschine 5 an. Die Elektromaschine 5 kann sich in einem generatorischen Betrieb befinden. Die erzeugte elektrische Energie kann - ggf. gepuffert über einen elektrochemischen Speicher - zum Antrieb der zweiten Elektromaschine 7 genutzt werden.

Wird die Schiebemuffe des Klauenverbinders 89 in die rechts benachbarte Stellung zu der Schaltstellung II verschoben, also in die Schaltstellung III, so befindet sich das Sonnenrad 77 über den Klauenverbinder 89 mit der äußeren Welle 27, also der Hohlwelle in einer drehfesten Verbindung. Das Planetengetriebe 19 befindet sich in einem unverblockten Zustand. Der Antrieb 1 kann in einem leistungsverzweigten Gang betrieben werden. Es kann auch leistungsverzweigt angefahren werden.

Wird die Schiebemuffe des Klauenverbinders 89 in die wiederum zur ersten rechts benachbarten Stellung (Schaltstellung III) weitere Schaltstellung IV verbracht, so schafft der Klauenverbinder 89 eine Verbindung zwischen der äußeren Welle 27 und der inneren Welle 29. Über die Verbindung zur inneren Welle 29 dreht der Planetenträger 65 mit der gleichen Drehzahl wie das Sonnenrad 77. Es liegt ein Blockumlauf des Planetengetriebes 19 vor. Zur Übersetzung stehen nur noch die Schaltstufen des zweiten Teilgetriebes 13 zur Verfügung. Das Stirnradnebenwellengetriebe 23 bestimmt mit seinen Übersetzungsstufen die möglichen Gangübersetzungen des Getriebes 9.

Das Stirnradnebenwellengetriebe 23 hat drei Zahnradpaarungen 81, 83, 85. Die Zahnradpaarungen können so gestaltet werden, dass die erste Zahnradpaarung 81 für die unmittelbare Übersetzung in den dritten Gang ausgelegt ist (G3). Die zweite Zahnradpaarung 83 ist für die unmittelbare Übersetzung in den fünften Gang (G5) ausgelegt. Die dritte Zahnradpaarung 85 ist für die unmittelbare Übersetzung in den siebten Gang (G7) ausgelegt. Durch eine Windung des Kraft- bzw. Momentflusses über die Zahnradpaarung zuerst der zweiten Zahnradpaarung 83, anschließend über die dritte Zahnradpaarung 85 und abschließend über die erste Zahnradpaarung 81 kann ein Übersetzungsverhältnis für einen ersten Gang (G1) erreicht werden. Es wird von der Zentralwelle 25 ("weg"-)gewunden, um anschließend wieder auf die Zentralwelle 25, genauer die äußere Welle 27 ("zurück"-)zuwinden.

Wie sich aus der Beschreibung der Figur 1 ergibt, können alle möglichen Kombinationen mit den vier Schaltelementen 31, 33, 35, 37, 39 eingestellt werden. Figur 1 zeigt einen Hybridantrieb 1, der mit nur drei Zahnradpaarungen in dem Stirnradnebenwellengetriebe 23 auskommend sieben Gänge sowohl in Vorwärtsrichtung als auch wahlweise in Rückwärtsrichtung anbietet.

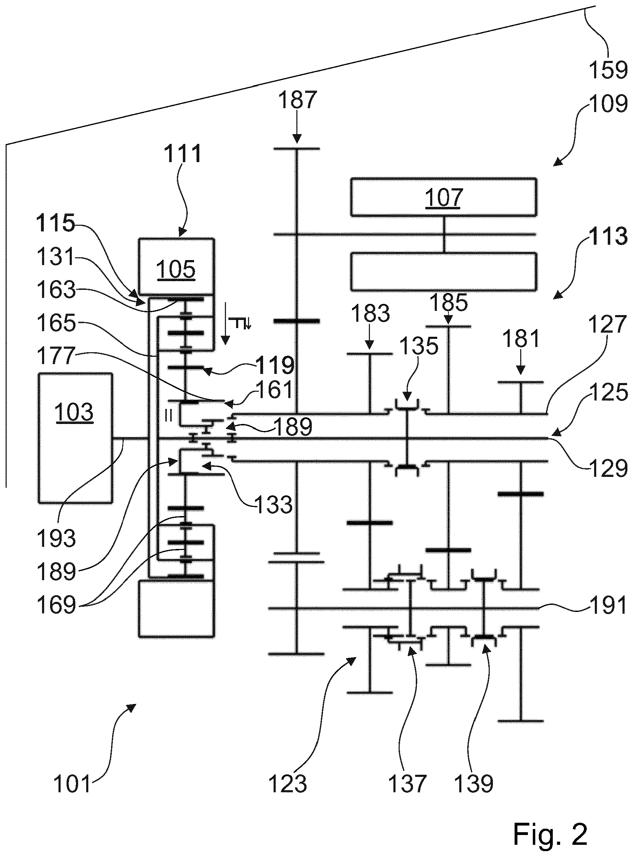

Figur 2 zeigt einen Hybridantrieb 101, der aufgrund seines Arrangements der Verbrennungskraftmaschine 103, der ersten Elektromaschine 105 und der zweiten Elektromaschine 107 besonders kurz baut, jedoch etwas breiter. Der Kern des Getriebes 109 entspricht im Wesentlichen dem Kern des Getriebes 9 (s. Figur 1).

Daher sind ganze Passagen der Beschreibung zu Figur 1 vollständig auf die Figur 2 dadurch zu übertragen, dass die in Figur 1 verwendeten Bezugszeichen um 100 erhöht auf Figur 2 übertragen werden.

Die Verbrennungskraftmaschine 103 liegt fluchtend zur Zentralwelle 125. Zwischen Verbrennungskraftmaschine 103 und Zentralwelle 125 ist das Planetengetriebe 119 zwischengeschaltet. Das von der Verbrennungskraftmaschine 103 über ihre Motorwelle 193 in das Planetengetriebe 119 eingeleitete Drehmoment folgt der Kraftflussrichtung *̅F̅*̅ (F_{Vektor}). Das Drehmoment der Motorwelle 193 wird auf den ersten Rotationskörper 131 geführt. Der erste Rotationskörper 131 des ersten Teilgetriebes 111 ist ein Hohlrad 163. Außerhalb des Hohlrades 163 ist die Statorwicklung der ersten Elektromaschine 105 angeordnet. Die Statorwicklung der ersten Elektromaschine 105 kann im motorischen Betrieb einen Rotor antreiben, der in einen Planetenträger 165 übergeht. Zur Achse hin, auf der die Zentralwelle 125 und die Motorwelle 193 verlaufen, also in Nachbarschaft zu einer inneren Welle 129 befindet sich ein zweiter Rotationskörper 161, der als Sonnenrad 177 ausgestaltet ist. Zwischen dem Hohlrad 163 und dem Sonnenrad 177 sind Planeten 169 zur Kraft- und/oder Drehmomentübertragung sowie zur Summation oder Differentiation von Rotationsgeschwindigkeiten vorhanden. Die Planeten 169 lagern auf den Planetenträgern 165.

Das kompakte Arrangement des Hybridantriebs 101 ermöglicht die Platzierung sämtlicher Komponenten wie die Verbrennungskraftmaschine 103, die Elektromaschine 105, die Elektromaschine 107, das Getriebe 109 mit seinen beiden Teilgetrieben 111, 113 und den Elementen der inneren Schaltung wie den Schaltelementen 133, 135, 137, 138 innerhalb eines sich insgesamt bildenden Gehäuses, insbesondere in der Form einer Wandlerglocke 159. Die Komponenten des Getriebes 109, also die Komponenten des ersten Teilgetriebes 111 und die Komponenten des zweiten Teilgetriebes 113, werden von den Antriebsmaschinen Verbrennungskraftmaschine 103, Elektromaschine 105 und Elektromaschine 107 eingefasst, sodass die Wandlerglocke 159 durch die zusammengefügten Gehäuse der Antriebsmaschinen gebildet werden kann.

Das zweite Teilgetriebe 113 ist ein Stirnradnebenwellengetriebe 123, das dem Leistungsverzweigungsgetriebe 115 nachgeschaltet ist. Das Stirnradnebenwellengetriebe 123 arrangiert sich um die die Zentralwelle 125 herum. Die Zentralwelle 125 setzt sich aus einer äußeren Welle 127 und einer inneren Welle 129 zusammen.

Ein Klauenverbinder 189 schafft in Abhängigkeit seiner Schaltstellungen I, II, III, IV Verbindungen zwischen dem ersten Teilgetriebe 111 und dem zweiten Teilgetriebe 113. Mithilfe von Zahnradpaarungen 181, 183, 185, 187 können die Übersetzungen und damit die Momente in dem Stirnradnebenwellengetriebe 123 unterschiedlich eingestellt werden, um über das Abtriebselement 191 der Abtriebswelle bzw. Nebenwelle ausgeleitet zu werden.

Das zweite Schaltelement 135, das dritte Schaltelement 137 und das vierte Schaltelement 138 haben jeweils drei Schaltstellungen, die erste Schaltstellung I^{I}, I^{II}, I^{III}, die zweite Schaltstellung II^{I}, II^{II}, II^{III} und die dritte Schaltstellung III^{I}, III^{II}, III^{III}. Das zweite Schaltelement 135 kann wechselweise die eine Hälfte der äußeren Welle 127 (z. B. linke Teilwelle oder linke Halbwelle) mit der inneren Welle 129 oder die andere Hälfte der äußeren Welle 127 (z. B. rechte Teilwelle oder linke Halbwelle) mit der inneren Welle 129 verbinden, z. B. über eine Festradgegenverzahnung. Gleichermaßen bieten das dritte Schaltelement 137 und das vierte Schaltelement 139 Kopplungsmöglichkeiten in den Schaltstellungen, die von den Neutralstellungen abweichen zwischen einer äußeren Vorgelegewelle und einer inneren Vorgelegewelle, die zugleich das Abtriebselement 191 ist.

Die zweite Elektromaschine 107 ist eine Elektromaschine, die mit einem kleineren Drehmoment operiert als die Elektromaschine 7 (s. Figur 1). Die Elektromaschine 107 ist eine schnelldrehende Elektromaschine, d. h., es ist eine Elektromaschine, die mit mehr als 10.000 Umdrehungen/Minute drehen kann. Diese Auslegung lässt sich mithilfe eines Übersetzungsgetriebes kompensieren. Das Drehmoment, das aus der Elektromaschine 107 in das Getriebe 109 eingebracht werden soll, gelangt über wenigstens eine Zahnradpaarung 187 auf die Zentralwelle 125, genauer auf die äußere Welle 127 der Zentralwelle 125.

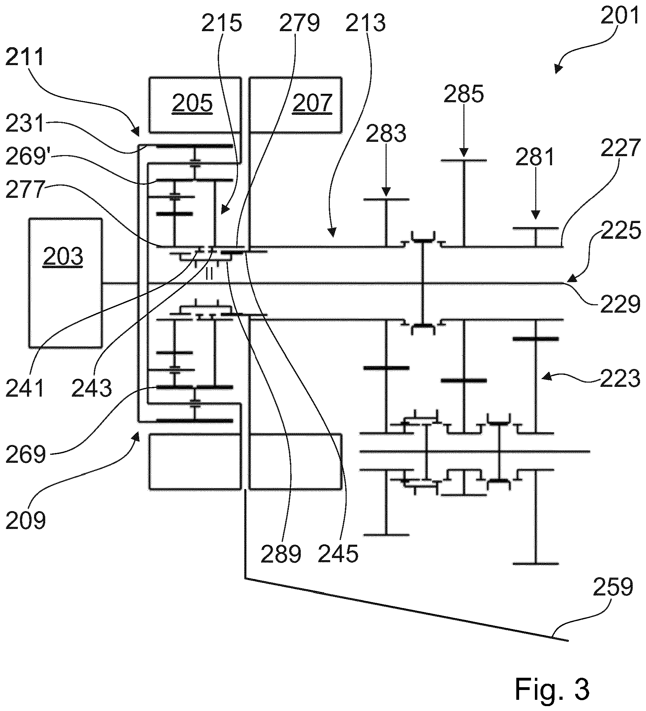

Figur 3 zeigt einen Hybridantrieb 201. Der Hybridantrieb 201 ähnelt in Bezug auf viele Komponenten den Hybridantrieben 1, 101 nach den Figuren 1 und 2. Kopfseits ist eine Verbrennungskraftmaschine 203 angeordnet, die ihre Antriebsleistung auf den Rotationskörper 231, der ein Hohlrad ist, einleiten kann. Die beiden Elektromaschinen 205, 207 leiten ihre Drehmomente ebenfalls an jenem Ende der Zentralwelle 225 ein, das benachbart zur Verbrennungskraftmaschine 203 angeordnet ist. Es handelt sich hierbei um jenes Ende der Zentralwelle 225, das das nächstgelegene Ende der Zentralwelle 225 zur Verbrennungskraftmaschine 203 ist. Die Elektromaschinen 205, 207 stehen in Verbindung mit jeweils einer Welle 227, 229 der Zentralwelle 225.

Das Getriebe 209 setzt sich aus dem ersten Teilgetriebe 211 und dem zweiten Teilgetriebe 213 zusammen. Die beiden Teilgetriebe 211, 213 machen das (Gesamt-)getriebe 209 aus. Das erste Teilgetriebe 211 ist das Leistungsverzweigungsgetriebe 215. Das zweite Teilgetriebe 213 ist ein Stirnradnebenwellengetriebe 223. Das Leistungsverzweigungsgetriebe 215 unterscheidet sich von dem Leistungsverzweigungsgetriebe 15 insoweit, als es zwei Sonnenräder 277, 279 aufweist. Der Radsatz des Leistungsverzweigungsgetriebes 215 ist um eine zweite Sonne, dem zweiten Sonnenrad 279, erweitert, die mit den Planeten 269, 269^{I} der ersten Stufe in Eingriff ist. Damit ergibt sich ein vollwertiger mechanischer Rückwärtsgang durch das Leistungsverzweigungsgetriebe 215.

Der Hybridantrieb 201, genauer das Getriebe 209 bietet ebenfalls vier Schaltstellungen I, II, III, IV. Im Inneren der Sonnenräder 277, 279 ist der Klauenverbinder 289 angeordnet, der durch ein Verschieben zwischen den Schaltstellungen I, II, III, IV wechseln kann. Das Muffenteil des Klauenverbinders 289 ist dafür bestimmt, permanent im Eingriff mit der dritten Gegenzahnung 245 zu stehen, die auf der Innenseite der äußeren Welle 227 angeordnet ist. Weitere Verzahnungen als Gegenzahnungen 241, 243 befinden sich an den Sonnenrädern 277, 279. Der Teil des Klauenverbinders 289, der die Schiebemuffe ist, soll sich also immer im Eingriff mit der äußeren Welle 227 befinden. Durch ein axiales Verschieben kann ein wahrweiser Eingriff mit einer Sonne, einem Sonnenrad 277 oder 279, mit beiden Sonnenrädern 277, 279 oder mit keinem der Sonnenräder 277, 279 hergestellt werden.

In der neutralen Schaltstellung befindet sich der Klauenverbinder in einer solchen Stellung, dass nur ein Eingriff mit der Gegenzahnung 245 erfolgt ist. Hierdurch wird ein rein elektrischer Antrieb dank der Elektromaschine 205, 207 ermöglicht. Wird der Klauenverbinder 289 in eine solche Stellung gebracht, dass das erste Sonnenrad 277 über die Gegenzahnung 241 im Eingriff mit dem Klauenverbinder 289 steht, während der Klauenverbinder 289 über die Gegenzahnung 245 mit der äußeren Welle 227 in Verbindung steht, ist leistungsverzweigtes Fahren möglich. Werden die Gegenzahnungen erste Gegenzahnung 241 und zweite Gegenzahnung 243 über den Klauenverbinder 289 geblockt, so ist ein verblockter Betrieb des Leistungsverzweigungsgetriebes 215 möglich.

Durch die Zahnradpaarungen 281, 283, 285 bietet das Stirnradnebenwellengetriebe 223 drei Gangübersetzungsstufen, die idealerweise für die Gänge 3 (G3), 5 (G5) und 7 (G7) abgestuft sind. Die übrigen Gänge können als Zwischengänge durch das Leistungsverzweigungsgetriebe 215 realisiert werden. Zusätzlich gibt es noch eine Windungsmöglichkeit durch das Stirnradnebenwellengetriebe 223, damit dieses den ersten Gang (G1) anbietet. Ein Fachmann versteht, dass auch andere geeignete Abstufungen für die Gangübersetzungen gewählt werden können, z. B. zweiter (G2), vierter (G4) und sechster Gang (G6).

Die zweite Elektromaschine 207 kann Teil des Stirnradnebenwellengetriebes 223 sein, sodass eine Kupplungsglocke 259 über diesen Teil des Getriebes 209 gelegt werden kann.

Figur 4 zeigt einen Hybridantrieb 301 mit zwei Teilgetrieben 311, 313, die jeweils ein Planetengetriebe 319, 321 haben. Die beiden Teilgetriebe 311, 313 setzen sich zu einem Gesamtgetriebe 309 zusammen. Dargestellt in Figur 4 ist auch der zweite Rotationskörper 361 des ersten Teilgetriebes 311, mit dem der Klauenverbinder 389 in Eingriff steht. Die Antriebsmomente werden von den Antriebsmaschinen Verbrennungskraftmaschine 303, erste Elektromaschine 305 und zweite Elektromaschine 307 entweder in das erste Planetengetriebe 319 oder in die äußere Welle 327 der Zentralwelle 325 eingeleitet. Die Übersetzung für das Drehmoment an dem Abtriebselement 391 ergibt sich aus den Schaltstellungen der Schaltelemente 333, 335, 337. Das Schaltelement 333 ist ein Klauenverbinder 389. Der Klauenverbinder 389 entspricht in seinem Aufbau dem Klauenverbinder 89. Die Erläuterungen zu dem ersten Teilgetriebe 11 nach Figur 1 lassen sich auf das Getriebe nach Figur 4 unmittelbar übertragen. Zur Vermeidung von Wiederholungen sei in Bezug auf die Klauenverbinder 389 und das Planetengetriebe 319 auf die Erläuterungen zu dem Klauenverbinder 89 und dem Leistungsverzweigungsgetriebe 15 bzw. Planetengetriebe 19 (jeweils Figur 1) verwiesen.

Die Zentralwelle 325 teilt sich in äußere Welle 327 und innere Welle 329. Die äußere Welle 327 mündet in das Sonnenrad 378. Die innere Welle 329 mündet in das Sonnenrad 379.

Die Wirkung der einzelnen Schaltstellungen I, I^{I}, I^{II}, II, II^{I}, II^{II}, III, III^{I}, IV für die Schaltelemente 333, 335, 337 ergibt sich aus nachfolgender Tabelle. Die Hohlräder und/oder Planetenträger 365, 367 können dank der Schaltelemente 335, 337 festgesetzt werden und/oder verblockt werden.

Figur 5 zeigt eine weitere Ausgestaltung eines Schaltelements 501, das dem Schaltelement 33 (Figur 1) bzw. 333 (Figur 4) ähnelt. Viele Erläuterungen zu den Schaltelementen 33 und 333 lassen sich somit auf die Darstellung des Schaltelements 501 übertragen. Zu dem Schaltelement 501 gehört die Schiebemuffe 505. Die Schiebemuffe 505 kann vier verschiedene Schaltstellungen I, II, III, IV einnehmen. Die einzelnen Schaltstellungen I, II, III, IV werden durch eine laterale Arretierung gesichert.

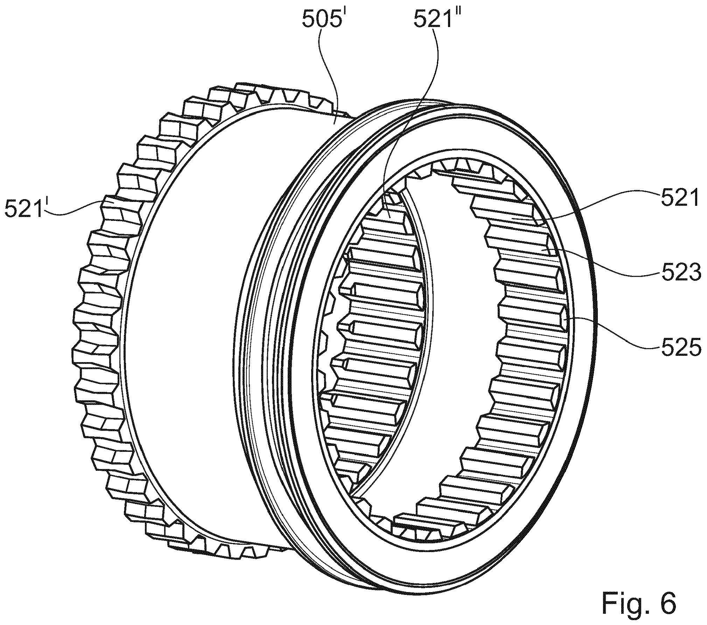

Figur 6 zeigt eine Ausgestaltung einer Schiebemuffe 505^{I} mit drei Zahnkränzen 521, 521^{I}, 521^{II}. Jeder der Zahnkränze 521, 521^{I}, 521^{II} hat Zähne wie den Zahn 523, der ein Dach 525 hat. Das Dach 525 ist hinterschnittfrei; das Dach 525 ist dachschrägenfrei - es verläuft gleichmäßig auf einem einheitlichen Niveau. Die Schiebemuffe 505^{I} nach Figur 6 entspricht funktionell der Schiebemuffe 505 nach Figur 5, jedoch sind für die Zahnkränze 521, 521^{I}, 521^{II} andere (innen bzw. außen) Oberflächen der Schiebemuffe 505^{I} gewählt. Bei beiden Schiebemuffen 505, 505^{I} wird ein Abschnitt einer Oberfläche für einen Zahnkranz 521,521^{I}, 521^{II} genutzt. Als Oberfläche für einen Zahnkranz 521,521', 521" bieten sich Innen- und/oder Außenoberflächen der Schiebemuffe 505, 505^{I}. Es können wahlweise Innen- und/oder Außenoberflächen der Schiebemuffe 505, 505^{I} zur Anordnung der Zahnkränze 521, 521^{I}, 521^{II} verwendet bzw. genutzt werden.

Wie anhand der Schaltstellungen I, II, III, IV (nach Figur 5) zu sehen ist, greifen die Zahnkränze 521, 521^{I}, 521^{II} in Abhängigkeit der Schaltstellung I, II, III, IV der Schiebemuffe 505, 505^{I} in Gegenverzahnungen 541, 543, 545 an z. B. der Zentralwelle 525 ein.

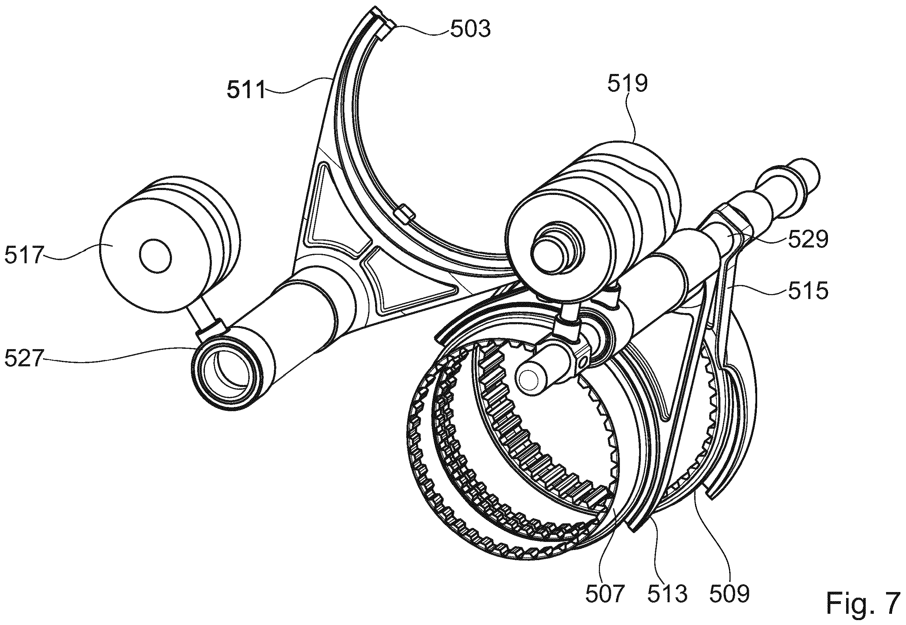

Die Schiebemuffen wie die Schiebemuffen 507, 509 (siehe Figur 7) können über Schaltgabeln 511, 513, 515 bewegt werden. Hierfür werden die Schaltgabeln 511, 513, 515 über Schaltwalzen 517, 519 gesteuert. Die Schaltwalzen 517, 519 haben eine Mimik in der Form einer Steuernut eingearbeitet. Die Schaltgabeln wie die Schaltgabeln 511, 513, 515 lagern auf Wellen 527, 529. Für eine bessere Führung haben die Schaltgabeln wie die Schaltgabel 511 ein Führungselement 503. Die Wellen 527, 529 können über Lagerstellen, z. B. an den Enden der Wellen 527, 529, in einem Gehäuse des Getriebes 9, 109, 209 (siehe Figuren 1, 2, 3) wie die Wandlerglocke 59, 159 oder die Kupplungsglocke 259 befestigt sein. Die Relativbeziehungen bzw. die Abstände zwischen den Schiebemuffen 507, 509 können in Abhängigkeit der zu wählenden Schaltstellung verändert werden. Wie sich aus Figur 7 ergibt, können die beiden Schiebemuffen 507, 509 sowohl ineinander eingreifend als auch von einander beabstandet angeordnet werden. Der Abstand zwischen den Schiebemuffen 507, 509 bestimmt sich aus den Positionen der Schaltgabeln 511, 513, 515. Die Schiebemuffen 507, 509 können so das Konzept "Schiebemuffe-in-Schiebemuffe" als auch das Konzept "entkoppelte Schiebemuffen" realisieren, je nach Abstand zwischen den Schiebemuffen 507, 509. Hierdurch ist es möglich, die beiden Schiebemuffen 507, 509 zu einer Schiebemuffe 505, 505^{I}, so wie z. B. in den Figuren 5 und 6 gezeigt, zu vereinen, bei der der Abstand der Zahnkränze 521, 521', 521" zueinander variierbar, insbesondere in Abhängigkeit der genauen Lage der Schiebemuffe 505, 505^{I} in Bezug auf die Zentralwelle 525, ist.

Die in den einzelnen Figuren gezeigten Ausgestaltungsmöglichkeiten lassen sich auch untereinander in beliebiger Form verbinden.

So ist verständlich, dass die auf dem Inneren bzw. auf dem Äußeren der jeweiligen Gegenelemente platzierten Gegenverzahnungen wie die erste Gegenverzahnung 41, 241, zweite Gegenverzahnung 43, 243, dritte Gegenverzahnung 45, 245, vierte Gegenverzahnung 47, fünfte Gegenverzahnung 49 ebenfalls - je nach Designauslegung der Klauenmuffe - auf dem Äußeren bzw. dem Inneren der Gegenelemente angeordnet werden können.

### Mögliche Schaltstellungen der Schaltelemente 333 (Klaue 1 - K1), 335 (Klaue 2 - K2) und 337 (Klaue 3 - K3) zeigt die nachfolgende Tabelle:

| | | 333 - K1 | | | | 335 - K2 | | | 337 - K3 | |
|---|---|---|---|---|---|---|---|---|---|---|
| Gang | | I (links) | II neutral | III (rechts 1) | IV (rechts 2) | I^{I} (links) | II^{I} neutral | III^{I} (rechts) | I^{II} (links) | II^{II} neutral |
| | **Anfahren** | | | | | | | | | |
| 1 | | | | x | | x | | | | x |

| **Hybrid** | | | | | | | | | | |
|---|---|---|---|---|---|---|---|---|---|---|
| 1 | | | | | x | x | | | | x |
| 2 | | | | x | | x | | | x | |
| 3 | | | | | x | | x | | x | |
| 4 | | | | x | | | | x | x | |
| 5 | | | | | x | | | x | | x |
| R | | x | | | | x | | | | x |

| **E-Drive** | | | | | | | | | | |
|---|---|---|---|---|---|---|---|---|---|---|
| 1 | | | x | | | x | | | x | |
| 2 | | | x | | | | | x | x | |

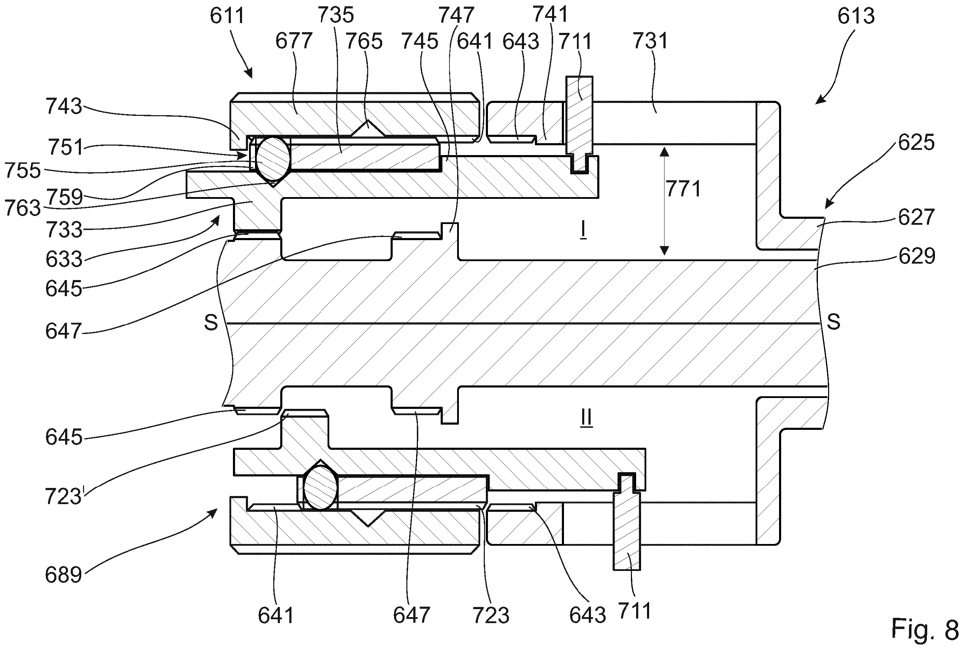

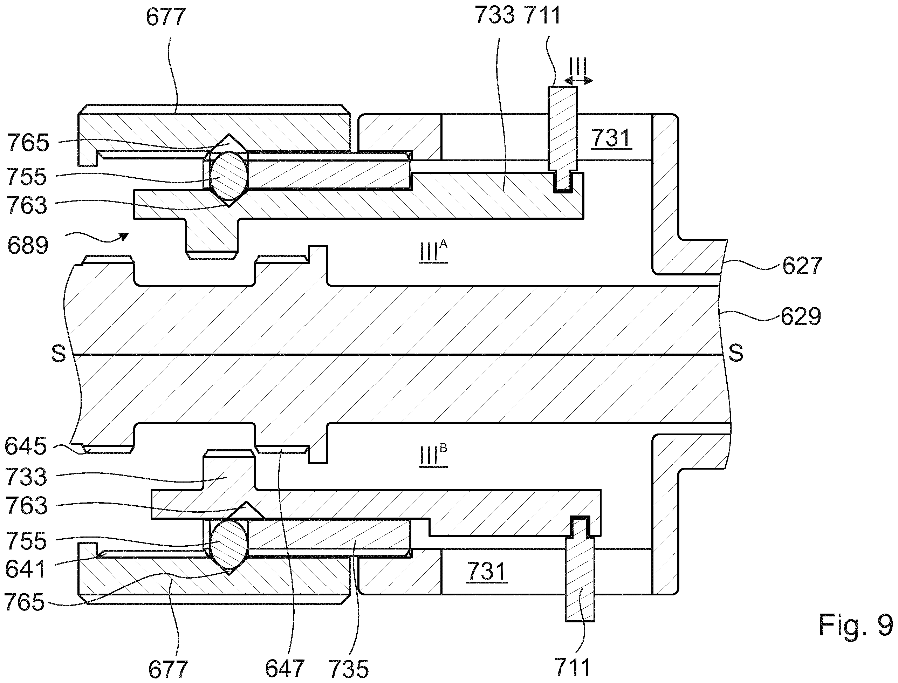

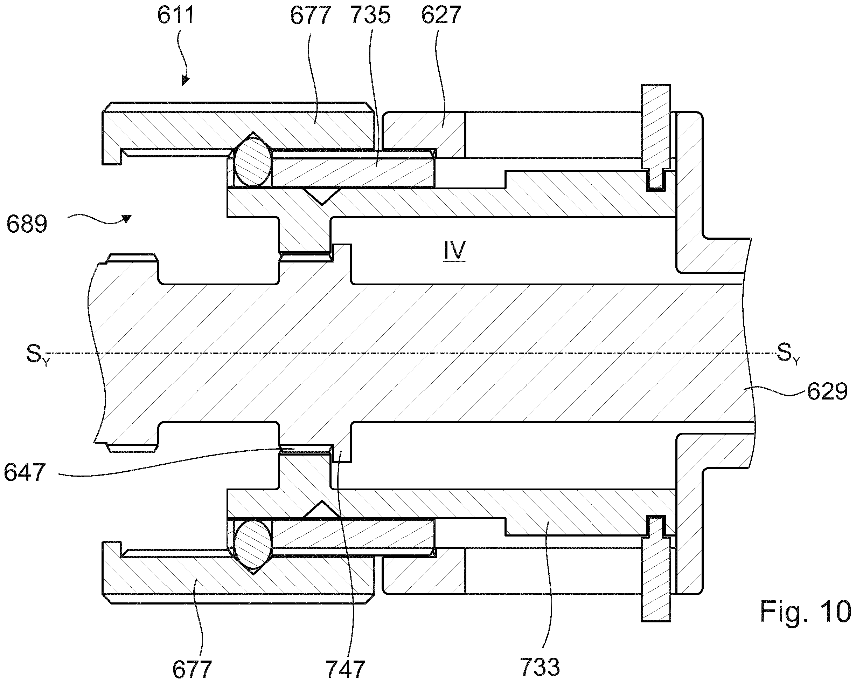

Die Figuren 8 bis 10 zeigen in einer konstruktiv-ähnlichen Darstellung, jedoch noch vereinfacht im Vergleich mit einer üblichen Konstruktionszeichnung, um das Verständnis des Lesers für vorliegende Erfindung zu fördern, eine mögliche Ausgestaltungsvariante des Getriebeabschnitts des Getriebes 9 (siehe Figur 1), zu dem das Schaltelement 33 gehört. In den Figuren 8 bis 10 werden unterschiedliche Schaltstellungen I bis IV des Schaltelements 33 (nach Figur 1) nach einander aufgezeigt. In den Figuren 8 und 9 sind zwei Schaltstellungen I, II bzw. III^{A} und III^{B}, jeweils als halbes Schnittbild, dargestellt. In Figur 10 wird die vierte Schaltstellung IV in einem Vollbild vorgestellt, sodass die innere Welle 629 nicht mehr entlang der Schnittlinie S - S (siehe Figuren 8 und 9) geteilt dargestellt ist, sondern ein Ausschnitt der inneren Welle 627 über ihre gesamte Wellenbreite aufgezeichnet ist. Die innere Welle 629 erstreckt sich entlang der Symmetrielinie S_{Y} - S_{Y}. Die in der Figur 1 und in der Figur 7 mit ihren entsprechenden Bezugszeichen gezeigten Komponenten und Bauteile sind in den Figuren 8 bis 10 durch entsprechend konstruktiv entworfene Bauteile und Komponenten mit um 600 erhöhte bzw. um 200 erhöhte Bezugszeichen wiedergegeben. Will ein Leser eine mögliche konstruktive Variante bzw. Ausgestaltungsform eines Bauteils betrachten, das in der Figur 1 gezeigt ist, so möge er das um 600 erhöhte Bezugszeichen in den Figuren 8 bis 10 suchen, wobei zur Klarstellung wiederholt sei, dass die Figuren 8 bis 10 schwerpunktmäßig die Bauteile und Baugruppe um das erste Schaltelement 633 herum darstellen. Ein Auszug der Komponenten, die in Figur 7 dargestellt sind, wird in den Figuren 8 bis 10 durch Komponenten mit um 200 erhöhten Bezugszeichen in äquivalenter Anwendung offenbart. Die Figuren 8 bis 10 stellen ausschnittsweise aus dem Getriebe 9 der Figur 1 jenen Klauenverbinder 89 als Klauenverbinder 689 dar, der eine Verbindung zwischen den beiden Teilgetrieben 611, 613 herstellen kann. Mit anderen Worten, es wird das Brückenglied gezeigt, das in der Form eines Klauenverbinders 689 die Teilgetriebe 611, 613 miteinander in zumindest einer Schaltstellung I, III, IV zu einem Gesamtgetriebe 9 verkuppeln kann.

Figur 8 zeigt den Klauenverbinder 689. Zu dem Klauenverbinder 689 gehören die Schiebeteile 733, 735. Die Schiebeteile 733, 735 sind schiebemuffenartig ausgestaltet. Es kann auch gesagt werden, der Klauenverbinder ist als Schiebemuffe in einer Schiebemuffe gestaltet. Der Klauenverbinder 689 ist dafür da, in vier verschiedenen Schaltstellungen I, II, III^{a}, III^{b}, IV Leistungsflussbrücken zwischen ersten und zweiten rotierenden Teilen nach Schaltbewegungen herzustellen. Die dritte Schaltstellung III erstreckt sich über einen Schiebebereich, sodass mehrere Positionen von der Schaltgabel 711 innerhalb der Durchbrechung 731 eingenommen werden können (vgl. Figur 9), um den Klauenverbinder 689 in einer dritten Schaltstellung III zu positionieren (siehe die Positionsangabe zu Schaltstellung III^{A} und zu Schaltstellung III^{B}, die der dritten Schaltstellung III zuzurechnen sind).

Zu dem ersten Teilgetriebe 611 ist das Sonnenrad 677 zu sehen. Von dem zweiten Teilgetriebe 613 ist die Zentralwelle 625 ausschnittsweise zu sehen. Die Zentralwelle 625 umfasst die äußere Welle 627 und die innere Welle 629. Die äußere Welle 627 läuft bereichsweise parallel zur inneren Welle 629. Zur Schaffung eines Aufnahmeraumes ist ein Ende der äußeren Welle 627 beabstandet über den Abstand 771. Der Abstand 771 ist so groß, dass die in Längsrichtung sich erstreckenden Teile des ersten Schaltelements 633 in diesen Abstand einfahren können, d. h. in längsverlaufender Richtung bzw. in Querorientierung. Das erste Schaltelement 633 umfasst das erste Schiebeteil 733, das zweite Schiebeteil 735 sowie Verbindungselemente der Schaltgabel 711. Zwischen dem ersten Schiebeteil 733 und dem zweiten Schiebeteil 735 ist eine Arretierung 751 vorhanden, die positionsabhängig, d. h. von den Positionen der Schiebeteile 733, 735 abhängig ein Arretieren und damit ein Verkuppeln der Schiebeteile 733, 735 herstellen kann.

Zu der Arretierung 751 gehören eine Kugel 755, ein Kugelkäfig 759 und Nuten 763, 765. Die erste Nut 763 ist in dem ersten Schiebeteil 733 ausgebildet. Die zweite Nut 765 ist in dem Sonnenrad 677, genauer auf der Innenseite des Sonnenrades 677 ausgebildet. Die Kugel 755 liegt im Kugelkäfig 759. Die Kugel 755 kann grundsätzlich, insbesondere aufgrund der Ausgestaltung des Kugelkäfigs 759, radial bewegt werden, d. h. in einer anderen Richtung als die für den Klauenverbinder 689 vorgesehene Schiebebewegung. Bei einer Überdeckung zwischen einer der Nuten 763, 765 und dem Kugelkäfig 759 kann die Kugel 755 in die Nut 763 bzw. 765 einfahren. Die Nuten 763, 765 sind konturiert. Die Nuten 763, 765 verflachen zu ihren Randbereichen hin. In einem mittleren Bereich ist der tiefste Bereich der Nut 763, 765. Die Konturierung der Nuten 763, 765 fördert das Arretieren und das Ausfahren, wenn eine Schubbewegung zumindest eines der Schiebeteile 733, 735 fortgesetzt wird.

Die äußere Welle 627 weist eine Durchbrechung 731 auf. Durch die Durchbrechung 731 kann ein Kontakt zwischen der Schaltgabel 711 und dem Klauenverbinder 689 hergestellt werden. Über die Schaltgabel 711 lässt sich zumindest eines der Schiebeteile 733, 735 zwischen den Enden seiner Bewegungsstrecke hin und her bewegen.

Der Bewegungsfreiheitsgrad der Schiebeteile 733, 735 wird durch Anschläge 741, 743, 745, 747 begrenzt. Das zweite Schiebteil 735 wird in seiner Bewegung von dem ersten Anschlag 741 auf der einen Seite und von dem zweiten Anschlag 743 auf der anderen Seite begrenzt. Eine weitere Begrenzung des Schiebeweges stellt der dritte Anschlag 745 dar. Das erste Schiebeteil 733 ist in axialer Richtung in Richtung auf das zweite Teilgetriebe 613 durch den vierten Anschlag 747 begrenzt.

Vier Gegenzahnungen 641, 643, 645, 647 befinden sich verteilt zwischen dem Sonnenrad 677, d. h. der ausleitenden Komponente des ersten Teilgetriebes 611 und dem ableitenden Rotationskörper des zweiten Teilgetriebes 613, der inneren Welle 629. Über entsprechende Zähne 723, 723^{I} können Eingriffe mit den Gegenzahnungen 611, 643, 645, 647 positionsabhängig von den Schiebeteilen 733, 735 hergestellt werden.

In der ersten Schaltstellung befindet sich das erste Schiebeteil 733 über seine Zähne wie dem Zahn 723^{I} in dem Eingriff mit der dritten Gegenzahnung 645. Das zweite Schiebeteil 735 befindet sich im Eingriff mit dem Sonnenrad 677. Die beiden Schiebeteile 733, 735 sind über die Arretierung 751 miteinander gekoppelt. Folglich ist eine serielle Verbindung zwischen dem Sonnenrad 677 und der inneren Welle 629 hergestellt. Hierdurch kann eine Rückwärtsdrehrichtung realisiert werden.

Um aus der ersten Schaltstellung I in die zweite Schaltstellung II zu gelangen, wird mit Hilfe der Schaltgabel 711 das erste Schiebeteil 733 in Richtung auf das zweite Teilgetriebe 613 bewegt. Über die Arretierung 751 wird das zweite Schiebeteil 735 mitgezogen bzw. mitgeschleppt.

Befindet sich der Klauenverbinder 689 in der zweiten Schaltstellung II, so befinden sich alle Zähne wie der Zahn 723^{I} des ersten Schiebeteils 733 außer Eingriff mit der Gegenzahnung 645. Obwohl weiterhin ein Eingriff mit der ersten Gegenzahnung 611 gegeben ist, kann nun das Sonnenrad 677 in der zweiten Schaltstellung II frei durchdrehen. In der zweiten Schaltstellung II, im Gegensatz zur ersten Schaltstellung I, schleppt das Sonnenrad 677 nicht mehr die innere Welle 629 mit, sondern es liegt eine Unterbrechung durch die Schiebebewegung nach rechts bzw. durch die Schiebebewegung auf das zweite Teilgetriebe 613 hin vor. Es hat eine Lastlosschaltung der Verbindung von dem Sonnenrad 677 stattgefunden.

Figur 9 zeigt den Klauenverbinder 689 in der dritten Schaltstellung III. Die dritte Schaltstellung III liegt nicht nur an einer einzigen Relativposition der Schaltgabel 711 in Bezug auf die Durchbrechung 731. Die dritte Schaltstellung III kann somit auch als Schaltstellungsbereich bezeichnet werden. In der dritten Schaltstellung III brückt das zweite Schiebeteil 735 das Sonnenrad 677 mit der äußeren Welle 627. Das zweite Schiebeteil 735 verbindet ein Ende der äußeren Welle 627 mit einem Teil der ersten Gegenzahnung 641.

Das Brücken über das zweite Schiebeteil 735 kann in der dritten Schaltstellung III auf verschiedene Arten und Weisen hergestellt werden.

In der Schaltstellung III^{A} ist die Kugel 755 im Eingriff mit der ersten Nut 763. Die Kugel 755 ist außer Eingriff aus der zweiten Nut 765. Die zweite Nut 765 ist die Nut in dem Sonnenrad 677. Aufgrund der Arretierung mithilfe der Kugel 755 in dem ersten Schiebeteil 733 durch den Eingriff in der Nut 763 des ersten Schiebeteils 733 erfolgt die drehmomentmäßige Kopplung zwischen dem Sonnenrad 677 und der äußeren Welle 627. Die innere Welle 629 wird durch den Klauenverbinder 689 nicht an das antreibende Sonnenrad 677 angebunden.

Wie anhand der Schnittlinie S - S in Figur 9 zu erkennen ist, zeigt Figur 9 eine weitere dritte Schaltstellung III^{B}. Die Schaltgabel 711 ist von dem Sonnenrad 677 weiter weggewandert. Aufgrund der weiterhin gegebenen Brücke zwischen dem Sonnenrad 677 und dem Ende der äußeren Welle 627 handelt es sich immer noch um die dritte Schaltstellung III. Durch die Durchbrechung 731 ist fast die Hälfte in Bezug auf die Längserstreckung des ersten Schiebeteils 733 zu sehen. Das erste Schiebeteil 733 befindet sich in einer solchen Position, dass das erste Schiebeteil 733 weder im Eingriff mit der dritten Gegenzahnung 645, noch mit der vierten Gegenzahnung 647 in Berührung ist. Die Kugel 755 jedoch hat ihre Position bezüglich der Nuten 763, 765 verändert. Die Kugel 755 ist, nicht zuletzt aufgrund der Rotationsgeschwindigkeit des Klauenverbinders 689 nach Außen, in die zweite Nut 765 hineingedrückt. Die Nut 765 ist eine angefaste Nut, die in ihrem mittleren Bereich die tiefste Einkerbung in das Sonnenrad 677 aufweist.

Obwohl das erste Schiebeteil 733 innerhalb eines Bewegungswegs zwischen der einen dritten Schaltstellung III^{A} und der anderen dritten Schaltstellung III^{B} wandern kann, bleibt das zweite Schiebeteil 735 in der dritten Schaltstellung III. Das zweite Schiebeteil 735 verbleibt somit in einer Kraftflussverbindung zwischen dem Sonnenrad 677 und der äußeren Welle 627.

In Figur 10 ist der Klauenverbinder 689 in der vierten Schaltstellung IV gezeigt. Das Sonnenrad 677, das nun in Figur 10, wie anhand der Symmetrielinie S_{Y}-S_{Y} zu erkennen ist, als ganzes, geschnittenes Rad dargestellt ist, wird über das zweite Schiebeteil 735 an das kraftaufnehmende Ende der äußeren Welle 627 angebunden. Das erste Schiebeteil 733 ist bis gegen den vierten Anschlag 747 geführt. Das erste Schiebeteil 733 schafft über die vierte Gegenzahnung 647 eine kraftschlüssige Verbindung auf die innere Welle 629. Durch den Klauenverbinder 689 sind somit innere Welle 629, äußere Welle 627 und Sonnenrad 677 verblockt. Das erste Teilgetriebe 611 befindet sich in einem verblockten Zustand, den der vierte Schaltzustand IV darstellt.

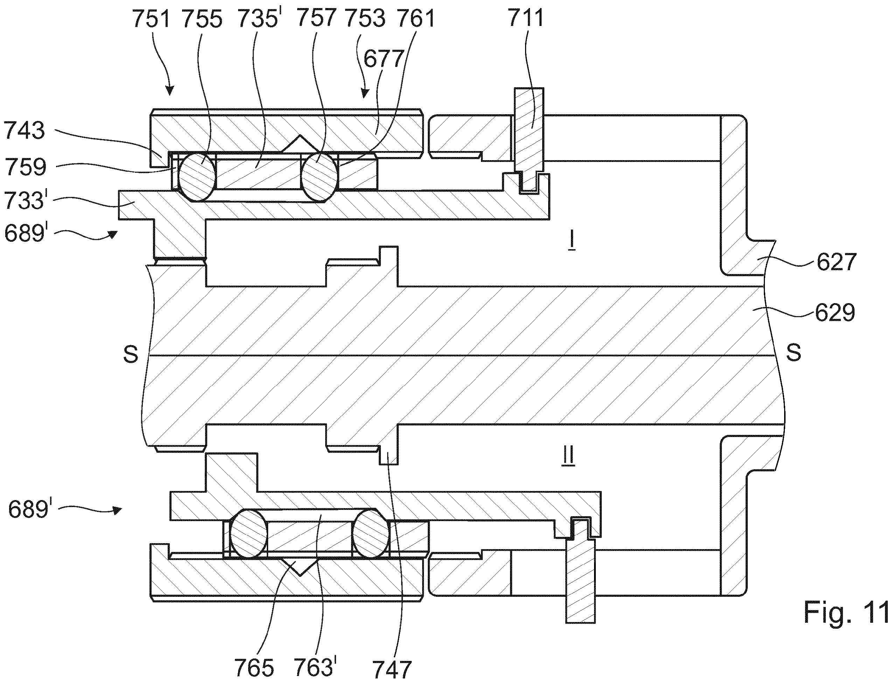

In den Figuren 11, 12 und 13 ist ein Klauenverbinder 689^{I} in den vier Schaltstellungen I, II, III, IV dargestellt. Der Klauenverbinder 689^{I} ist funktionell mit dem Klauenverbinder 689 der Figuren 8 bis 10 identisch. Daher können das Sonnenrad 677, die äußere Welle 627 und die innere Welle 629 unverändert beibehalten werden. Unabhängig davon, ob der Klauenverbinder 689 nach Figur 8 oder der Klauenverbinder 689^{I} nach Figur 11 in ein Getriebe 9 nach Figur 1 eingebaut ist, können die gleichen Rotationskörper wie Sonnenrad 677, äußere Welle 627 und innere Welle 629 in beiden Getriebevarianten eines Getriebes 9 nach Figur 1 verwendet werden.

Die Beschreibung in funktioneller Hinsicht und in Bezug auf den Schaltablauf zu den Figuren 8 bis 10 gilt gleichermaßen für die Funktion und den Schaltablauf gemäß einer Ausführungsform der Figuren 11 bis 13. Das innere Schiebeteil 733^{I} und das äußere Schiebeteil 735^{I} weichen insoweit von dem ersten Schiebeteil 733 und dem zweiten Schiebeteil 735 gemäß den Figuren 8 bis 10 ab, dass die beiden Schiebeteile 733^{I}, 735^{I} mit zwei Kugeln 755, 757 in zwei Kugelkäfigen 759, 761 operieren. Die erste Nut 763^{I} ist eine breite, beide Kugeln 755, 757 aufnehmende Nut 763^{I}. Die Kugeln 755, 757 können wechselweise in die zweite Nut 765 hineinfallen. Dadurch hat der Klauenverbinder 689^{I} eine erste Arretierung 751 und eine zweite Arretierung 753. Durch eine der Arretierungen 751, 753 kann, indem die jeweilige Arretierung 751, 753 die gleiche Nut 765 wechselweise einbindet, eine Anbindung des äußeren Schiebeteils 735^{I} an das Sonnenrad 677 erfolgen.

Auch die Position der Schaltgabel 711 im Zusammenhang mit den Schaltstellungen I, II, III, IV, d. h. wo genau die Schaltgabel 711 sich bei Einnahme einer der Schaltstellungen I, II, III, IV auf ihrem längsverschieblichen Weg befindet, ist an den exakt gleichen Relativpositionen wie bei einem Klauenverbinder 689 nach den Figuren 8 bis 10.

Statt des Operierens mit Anschlägen gemäß den Figuren 8 bis 10 operiert der Klauenverbinder 689^{I} aufgrund des Zusammenspiels der Kugeln 755, 757 mit den Nuten 763^{I}, 765. Die Kugeln 755, 757 können sich im Zusammenspiel mit den Nuten 763^{I}, 765 gegenseitig verriegeln. Die jeweilige Kugel 755, 757 gibt das der Nut 763^{I}, 765 abgewandte Rotationsteil wie z. B. das Sonnenrad 677 frei, wenn die Kugel 755, 757 in die Nut 763^{I}, 765 eingefahren ist.

Trotzdem ist es natürlich auch möglich, das Sonnenrad 677 mit seinem Anschlag 743 weiterhin einzusetzen. Auch ist es möglich, die innere Welle 629 mit ihrem Anschlag 747 zu verwenden. Der Klauenverbinder 689^{I} erfährt seine Bewegungsfreiheitsbegrenzung durch eine Kombination aus zwei Arretierungen 751, 753 und Anschlägen 743, 747. Es reichte, wenn entweder nur die eine Variante zur Bewegungsfreiraumbegrenzung, die Arretierungen 751, 753 oder die andere Variante, die Anschläge 743, 747 vorhanden wäre. Durch eine Kombination aus Arretierungen 751, 753 und Anschlägen 743, 747 können schnellere Umschaltungen realisiert und/oder größere Drehmomente übertragen werden.

Der Klauenverbinder 689 nach den Figuren 8 bis 10 genauso wie der Klauenverbinder 689^{I} nach den Figuren 11 bis 13 kann als innenliegender, innenverzahnter Klauenverbinder für eine Anordnung zwischen Sonnenrad 677 und koaxialer Doppelwelle, bestehend aus äußerer Welle 627 und innerer Welle 629, bezeichnet werden.

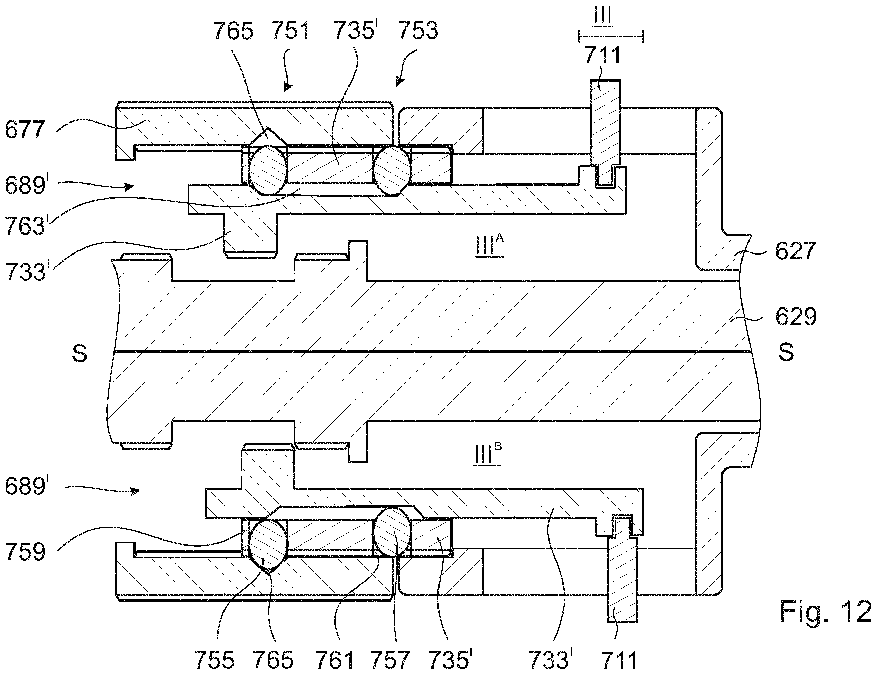

Wie anhand der Schnittlinie S - S zu sehen ist, zeigt die Figur 11 die erste und zweite Schaltstellung I, II und die Figur 12 die Schalt-(Teil-)stellungen III^{A}, III^{B}, die der dritten Schaltstellung III zugeordnet werden. In der dritten Schaltstellung III kann über die Schaltgabel 711 das erste Schiebeteil 733^{I} in einem solchen Bewegungsweg bewegt werden, dass die zweite Kugel 757 in die erste Nut 763^{I} eingefahren ist. Die zweite Arretierung 753 arretiert das erste Schiebeteil 733^{I} mit dem zweiten Schiebeteil 735^{I}. Die erste Arretierung 751 kann je nach exakter Stellung der Schaltgabel 711 in das Sonnenrad 677 eingefahren oder aus dem Sonnenrad 677 ausgefahren sein. Für das Ein- und Ausfahren der Kugel 755 hat das Sonnenrad 677 die Nut 765. Die Kugel 755 kann sich im Käfig 759 bewegen. Die Kugel 757 kann sich im Käfig 761 bewegen.

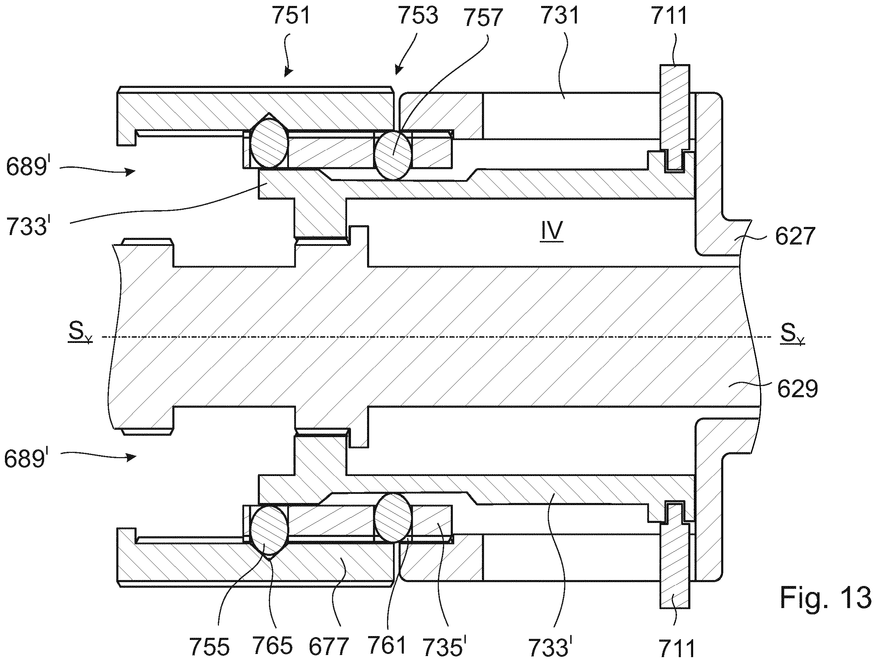

Auf die in Figur 13 gezeigte vierte Schaltstellung IV der symmetrischen (siehe Symmetrielinie S_{Y} - S_{Y}) Anordnung einer Verbindung zwischen der Doppelwellenanordnung, umfassend eine innere Welle 629 und eine äußere Welle 627, und dem Sonnenrad 677 lassen sich die Ausführungen zu den Figuren 11 und 12 entsprechend übertragen. Das Sonnenrad 677 ist über die erste Arretierung 751 an das zweite Schiebeglied 735^{I} angebunden. Das erste Schiebeglied 733^{I} wird von der Arretierung 753 durch die Kugel 757 in dem Kugelkäfig 761 geführt mit dem zweiten Schiebeglied 735^{I} verbunden. Die erste Kugel 755 kann in die Nut 765 bei deckender Anordnung fallen.

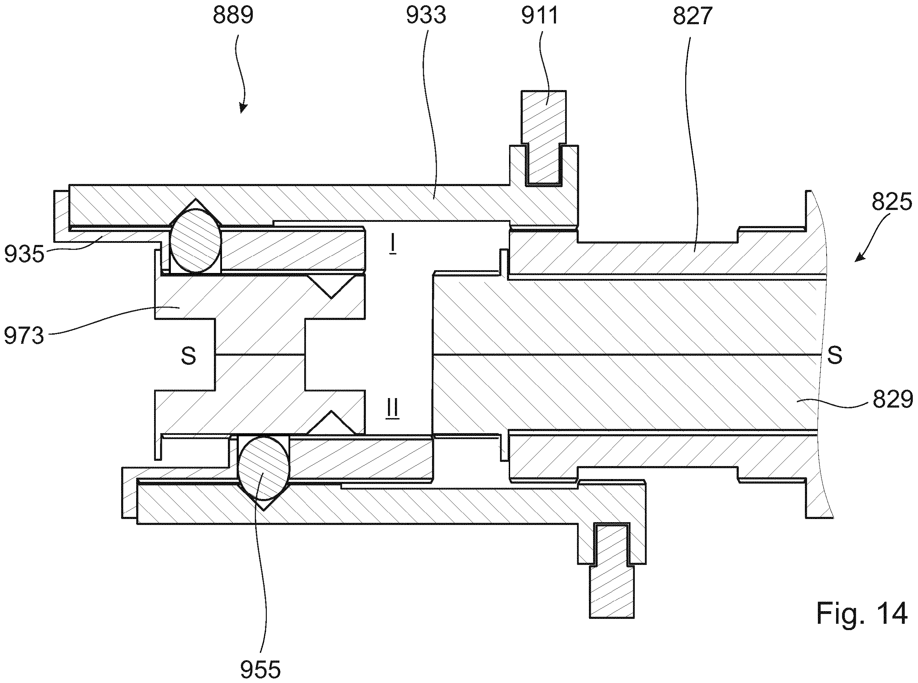

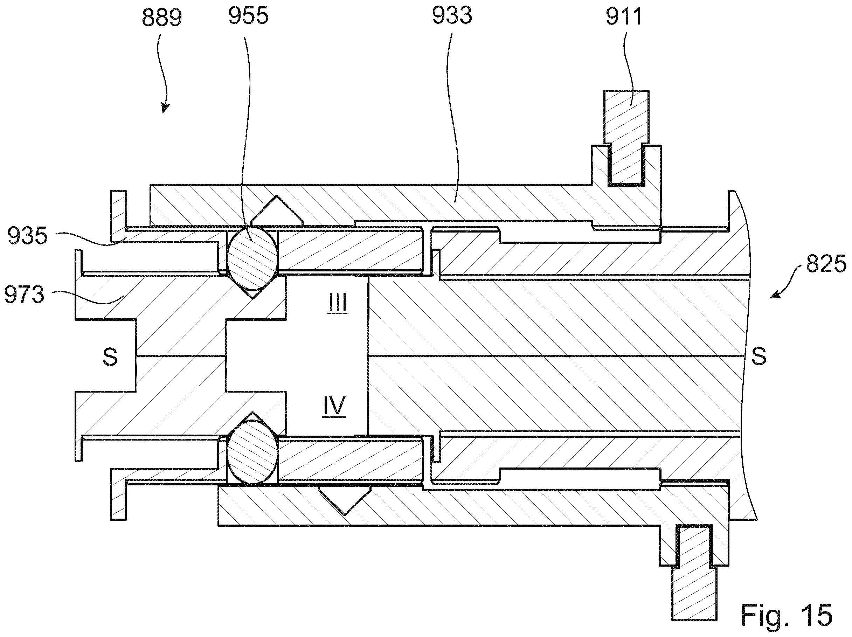

In den Figuren 14 und 15 wird eine Variante eines Klauenverbinders 889 gezeigt, jeweils in Schnittdarstellung entlang der Schnittlinie S - S in zwei Schaltzuständen pro Figur, also den Schaltzuständen I, II in Figur 14 bzw. den Schaltzuständen III, IV in Figur 15. Der Klauenverbinder 889 ist ein außenliegender Klauenverbinder 889, der mit zwei Schiebeteilen 933, 935 operiert. Die exakte Position der Schiebeteile 933, 935 ergibt sich aus der Positionsangabe der Schaltgabel 911.

Ein solcher Klauenverbinder 889 kann als Brückenglied zwischen einem Hub 973 und einer doppelten bzw. koaxialen Zentralwelle 825 eingesetzt werden, um wahlweise eine äußere Welle 827 und/oder eine innere Welle 829 mit dem Hub 973 unter Zusammenspiel mit der Kugel 955 zu arretieren. Das zweite Schiebeteil 935 bietet einen Anschlag für das erste Schiebeteil 933.

In dem Getriebe nach Figur 1 ist das zweite Schaltelement 35 als wahlweise brückendes Schaltelement zwischen der fünften Gegenzahnung 49 und der sechsten Gegenzahnung 51 ausgeführt. Soll mit einem Schaltelement 35 nicht nur eine geteilte äußere Welle 27, sondern auch eine, in Figur 1 als solche nicht dargestellte, geteilte innere Welle 29 kuppelbar sein, so bietet sich der Klauenverbinder 889 nach den Figuren 14 und 15 an.

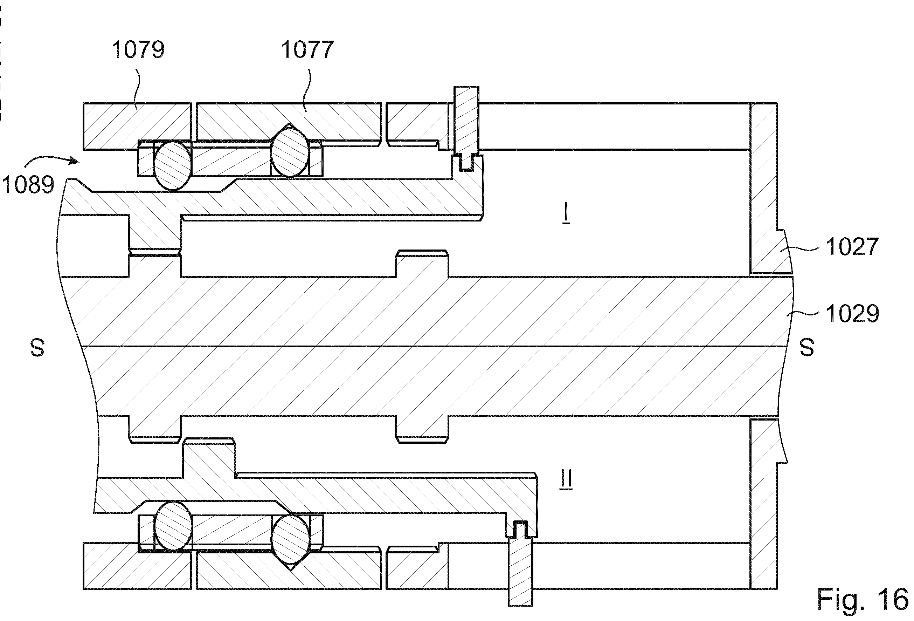

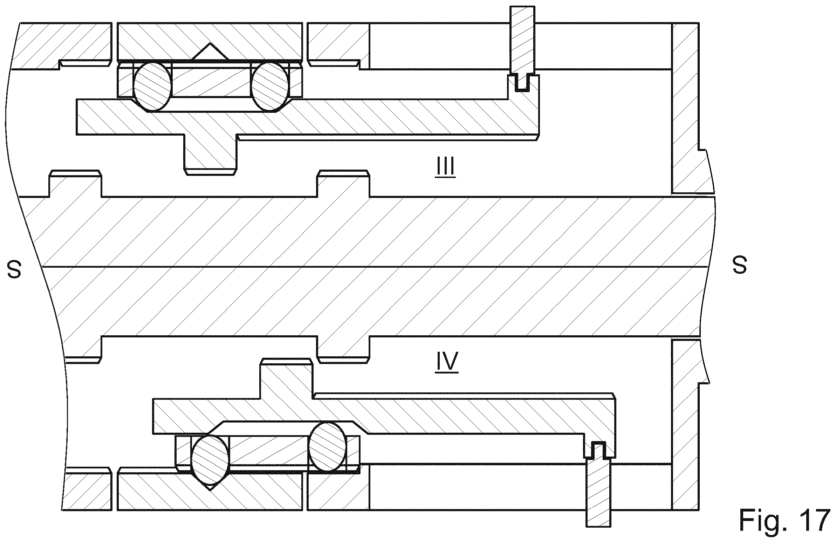

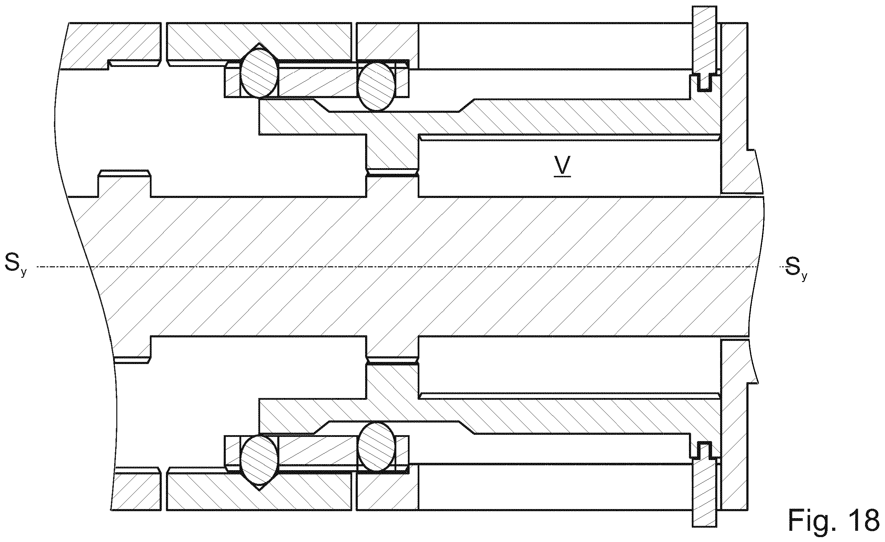

In den Figuren 16, 17 und 18 wird ein Klauenverbinder 1089 in fünf Schaltstellungen I, II, III, IV, V gezeigt. Der Klauenverbinder 1089 kann z. B. in einem Getriebe nach Figur 3 mit zwei Sonnenrädern 277, 279 eingesetzt werden, um die Sonnenräder 1077, 1079 wahlweise mit der inneren Welle 1029 und/oder der äußeren Welle 1027 zu verbinden. Interessanterweise bietet der Klauenverbinder 1089 fünf Schaltstellungen. Das Getriebe 209 nach Figur 3 ist mit einem Klauenverbinder 289 mit vier Schaltstellungen I, II, III, IV umgesetzt. Wird der Klauenverbinder 1089 nach den Figuren 16 bis 18 in einem Getriebe wie dem Getriebe 209 nach Figur 3 anstelle des Klauenverbinders 289 eingebaut, kann eine zusätzliche Abkopplung der inneren Welle 229 realisiert werden.

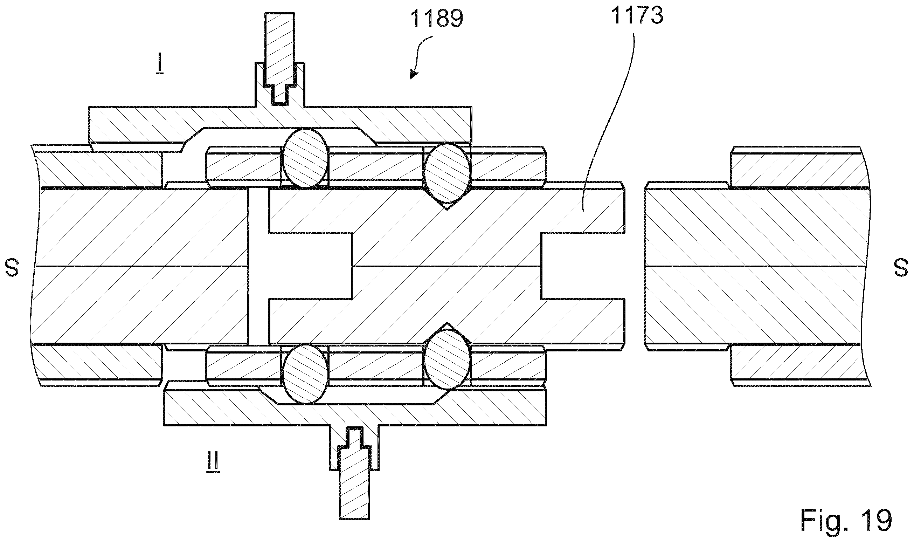

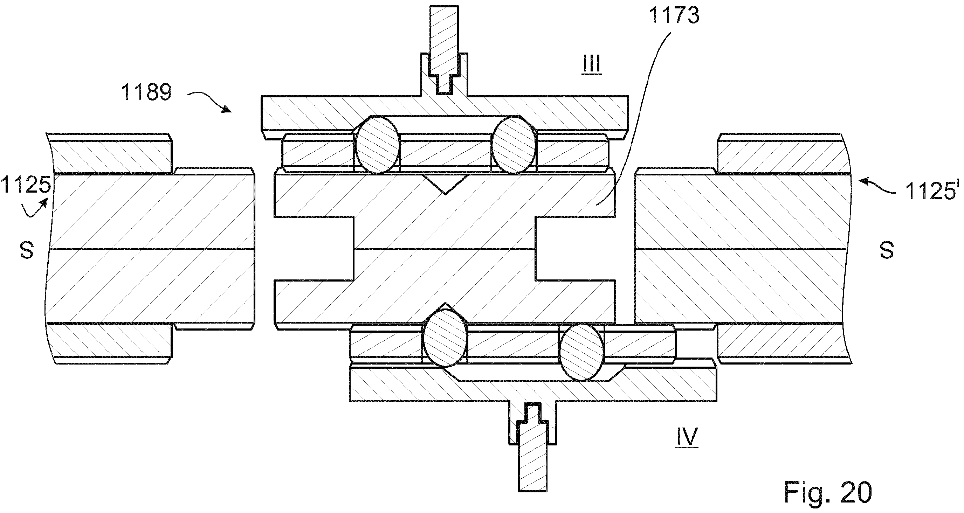

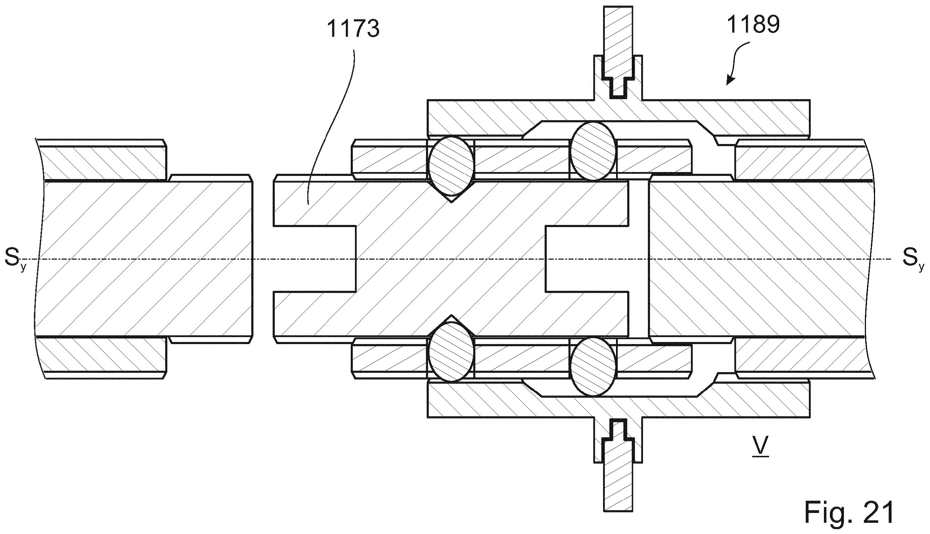

In den Figuren 19 bis 21 wird ein Klauenverbinder 1189 in fünf Schaltstellungen I, II, III, IV, V gezeigt, der über einen Hub 1173 endet und mithilfe zweier Kugelverbindungen Kopplungen zwischen den Wellen einer ersten Zentralwelle 1125 und einer zweiten Zentralwelle 1125^{I} herstellen kann. Wie in Figur 20 zu sehen ist, ist eine mittlere Schaltstellung III eine Neutralstellung, von der in zwei Richtungen jeweils zwei Schaltstellungen I, II bzw. IV, V eingenommen werden können. Der Klauenverbinder 1189 kann wiederum als außenliegender, außenverzahnter Klauenverbinder 1189 bezeichnet werden, der bis zu fünf Schaltstellungen I, II, III, IV, V wahrnehmen kann.

### Bezugszeichenliste

- 1, 101, 201, 301: Hybridantrieb
- 3, 103, 203, 303: Verbrennungskraftmaschine
- 5, 105, 205, 305: erste Elektromaschine, insbesondere eine Motor-Generator-Maschine
- 7, 107, 207, 307: zweite Elektromaschine, insbesondere eine Motor-Generator-Maschine
- 9, 109, 209, 309: Getriebe
- 11, 111, 211, 311, 611: erstes Teilgetriebe
- 13, 113, 213, 313, 613: zweites Teilgetriebe
- 15, 115, 215: Leistungsverzweigungsgetriebe
- 17: Differentialgetriebe
- 19, 119, 319: Planetengetriebe, insbesondere erstes Planetengetriebe
- 321: Planetengetriebe, insbesondere zweites Planetengetriebe
- 23, 123, 223: Stirnradnebenwellengetriebe
- 25, 125, 225, 325, 525, 625, 825, 1125, 1125^{I}: Zentralwelle
- 27, 127, 227, 327, 627, 1027: äußere Welle
- 29, 129, 229, 329, 629, 1029: innere Welle
- 31, 131, 231: erster Rotationskörper, wie ein Hohlrad
- 33, 133, 333, 501, 633: erstes Schaltelement, insbesondere Klauenschaltelement
- 35, 135, 335: zweites Schaltelement, insbesondere Klauenschaltelement
- 37, 137, 337: drittes Schaltelement, insbesondere Klauenschaltelement
- 39, 139: viertes Schaltelement, insbesondere Klauenschaltelement
- 41, 241, 541, 641: Gegenzahnung, insbesondere erste Gegenzahnung
- 43, 243, 543, 643: Gegenzahnung, insbesondere zweite Gegenzahnung
- 45, 245, 545, 645: Gegenzahnung, insbesondere dritte Gegenzahnung
- 47, 647: Gegenzahnung, insbesondere vierte Gegenzahnung
- 49: Gegenzahnung, insbesondere fünfte Gegenzahnung
- 51: Gegenzahnung, insbesondere sechste Gegenzahnung
- 53: Gegenzahnung, insbesondere siebte Gegenzahnung
- 55: Gegenzahnung, insbesondere achte Gegenzahnung
- 57: Gegenzahnung, insbesondere neunte Gegenzahnung
- 59, 159, 259: Wandler- und/oder Kupplungsglocke
- 61, 161, 361: zweiter Rotationskörper, wie ein Sonnenrad
- 63, 163: Hohlrad
- 65, 165, 365: Planetenträger, insbesondere erster Planetenträger
- 367: Planetenträger, insbesondere zweiter Planetenträger
- 69, 169, 269, 269^{I}: Planeten
- 71: erster Planetensatz
- 73: zweiter Planetensatz
- 375: dritter Planetensatz
- 77, 177, 277, 677, 1077: Sonnenrad, insbesondere erstes Sonnenrad
- 378: Sonnenrad
- 279, 379, 1079: Sonnenrad, insbesondere zweites Sonnenrad
- 81, 181, 281: erste Zahnradpaarung
- 83, 183, 283: zweite Zahnradpaarung
- 85, 185, 285: dritte Zahnradpaarung
- 187: vierte Zahnradpaarung
- 89, 189, 289, 389, 689, 689', 889, 1089, 1189: Klauenverbinder
- 91, 191, 391: Abtriebselement, wie Abtriebszahnrad oder Abtriebswelle
- 93, 193: Motorwelle
- 503: Führungselement, insbesondere Pad
- 505, 505': erste Schiebemuffe
- 507: zweite Schiebemuffe
- 509: dritte Schiebemuffe
- 511, 711, 911: erste Schaltgabel
- 513: zweite Schaltgabel
- 515: dritte Schaltgabel
- 517: erste Schaltwalze
- 519: zweite Schaltwalze
- 521, 521', 521": Zahnkranz
- 523, 723, 723^{I}: Zahn
- 525: Dach, insbesondere eines Zahns
- 527: Welle, insbesondere Lagerwelle für zumindest eine Schaltgabel
- 529: Welle, insbesondere Befestigungswelle für zumindest eine Schaltgabel
- 731: Durchbrechung, insbesondere in der äußeren Welle
- 733, 733', 933: erstes Schiebeteil, wie z. B. eine Schiebemuffe
- 735, 735', 935: zweites Schiebeteil, wie z. B. eine Schiebemuffe
- 741: erster Anschlag
- 743: zweiter Anschlag
- 745: dritter Anschlag
- 747: vierter Anschlag
- 751: erste Arretierung
- 753: zweite Arretierung
- 755, 1155: erste Kugel
- 757, 1157: zweite Kugel
- 759: erster Kugelkäfig
- 761: zweiter Kugelkäfig
- 763, 763^{I}: erste Nut
- 765: zweite Nut
- 771: Abstand
- 973,1173: Hub

- I, I^{I}, I^{II}, I^{III}: erste Schaltstellung
- II, II^{I}, II^{II}, II^{III}: zweite Schaltstellung
- III, III^{A}, III^{B}, III^{I}, III^{II}, III^{III}: dritte Schaltstellung
- IV: vierte Schaltstellung
- V: fünfte Schaltstellung

- S - S: Schnittlinie
- S_{y} - S_{y}: Symmetrielinie
- X: Verbindung, insbesondere eingekuppelte Verbindung
- *̅F̅*̅: Kraftflussrichtung (im Sinne eines Vektors)

## Patentansprüche

1. Hybridantrieb (1, 101, 201, 301)
mit einem leistungsverzweigenden, lastschaltbaren Getriebe (9, 109, 209, 309),
das ein schaltbares Getriebe (13, 113, 213, 313, 613), wie ein Stirnradnebenwellengetriebe (23, 123, 223), mit einer koaxialen, als Hohlwellen-Innenwellen-Paar ausgestalteten Zentralwelle (25, 125, 225, 325, 525, 625, 825, 1125, 1125^{I}) und
ein antriebsmäßig dem schaltbaren Getriebe (13, 113, 213, 313, 613), wie dem Stirnradnebenwellengetriebe (23, 123, 223), vorgeordnetes Leistungsverzweigungsgetriebe (15, 115, 215) aufweist,
wobei in dem Hybridantrieb (1, 101, 201, 301) wenigstens drei Kraftmaschinen (3, 5, 7; 103, 105, 107; 203, 205, 207; 303, 305, 307) vorhanden sind,
von denen wenigstens zwei als Antriebsmotor und/oder als Generator nutzbare Elektromaschinen (5, 7; 105, 107; 205, 207; 305, 307) sind und
zwei der Kraftmaschinen (3, 5, 7; 103, 105, 107; 203, 205, 207; 303, 305, 307), von denen wenigstens eine sowohl als Antriebsmotor als auch als elektrischer Generator betreibbar ist, jeweils drehbar und/oder rotationsfest mit einer Welle der koaxialen Zentralwelle (25, 125, 225, 325, 525, 625, 825, 1125, 1125^{I}) in Verbindung stehen oder bringbar sind,
wobei ein erstes Klauenschaltelement (33, 133, 333, 501, 633) mit wenigstens vier Schaltstellungen als ein Kraftflussverbinder zwischen einem Rotationskörper des Leistungsverzweigungsgetriebes (15, 115, 215) wie einem Sonnenrad und einer der Wellen der Zentralwelle (25, 125, 225, 325, 525, 625, 825, 1125, 1125') angeordnet ist, das selbst unter Last Schaltwechsel durchführen kann, ohne dass eine Zugkraftunterbrechung aufgrund des Schaltwechsels stattfindet.

2. Hybridantrieb (1, 101, 201, 301) nach Anspruch 1, wobei
das schaltbare Getriebe (13, 113, 213, 313, 613) in Form eines zweiten Teilgetriebes (13, 113, 213, 313, 613) ausgestaltet ist und/oder
das Leistungsverzweigungsgetriebe (15, 115, 215) in Form eines ersten Teilgetriebes (11, 111, 211, 311, 611) ausgestaltet ist,
das vorzugsweise in seiner Ausführung funktionell einem Differentialgetriebe in Planetengetriebebauweise entspricht.

3. Hybridantrieb (1, 101, 201, 301) nach Anspruch 1 oder Anspruch 2, wobei das erste Klauenschaltelement (33, 133, 333, 501, 633) wenigstens zwei schiebemuffenartige Schiebeteile (505, 505', 507, 509, 733, 733', 735, 735', 933, 935) hat, wobei mithilfe eines Führungselements (503) eine Schubbewegung an einem der zwei schiebemuffenartigen Schiebeteile (505, 505', 507, 509, 733, 733', 735, 735', 933, 935) einleitbar ist,
wodurch insbesondere durch Verzahnungen (521, 521^{I}, 521^{II}) an den schiebemuffenartigen Schiebeteilen (505, 505', 507, 509, 733, 733', 735, 735', 933, 935) zur Herstellung formschlüssiger Verbindungen zwischen einzelnen Teilen des ersten Klauenschaltelements (33, 133, 333, 501, 633) gegenseitige Eingriffe von je zwei Teilen des Klauenschaltelements (33, 133, 333, 501, 633) ausbildbar sind und das Klauenschaltelement (33, 133, 333, 501, 633) so wechselweise schaltbar ist.

4. Hybridantrieb (1, 101, 201, 301) nach Anspruch 3, wobei
in einer Schaltstellung das eine schiebemuffenartige Schiebeteil (507, 733, 733^{I}, 933) in dem Klauenschaltelement (33, 133, 333, 501, 633) in einer brückenartigen Verbindung steht, um eine Übertragung einer Last über das erste Klauenschaltelement (33, 133, 333, 501, 633) zu ermöglichen,
während das andere schiebemuffenartige Schiebeteil (509, 735^{I}, 935) wenigstens einen Freiheitsgrad hat, um in eine andere Schaltstellung gebracht zu werden.

5. Hybridantrieb (1, 101, 201, 301) nach einem der Ansprüche 1 bis 4, wobei eine der als Antriebsmaschinen genutzten Kraftmaschinen (3, 5, 7; 103, 105, 107; 203, 205, 207; 303, 305, 307) eine Verbrennungskraftmaschine (3; 103; 203; 303) ist, wobei vorzugsweise kraftflussmäßig und/oder momentenflussmäßig wenigstens eine der beiden Elektromaschinen (5, 7; 105, 107; 205, 207; 305, 307) zwischen der Verbrennungskraftmaschine (3; 103; 203; 303) und dem schaltbaren Getriebe (9, 109, 209, 309), insbesondere in den Kraft- und/oder Momentenfluss einkuppelbar, platziert ist.

6. Hybridantrieb (1, 101, 201, 301) nach Anspruch 5, wobei
eine Drehrichtungsumkehr im Vergleich mit einem Drehsinn einer aus der Verbrennungskraftmaschine (3; 103; 203; 303) herausführenden Welle dadurch herstellbar ist, dass die zweite Kraftmaschine einen Vorwärts- und einen Rückwärtslauf anbietet, wobei eine elektrische Energie zum Antrieb der zweiten Kraftmaschine aus einem Generatorbetrieb der ersten Kraftmaschine, die von einer von der Verbrennungskraftmaschine (3; 103; 203; 303) angetriebenen Welle gedreht wird, beziehbar ist.

7. Hybridantrieb (1, 101, 201, 301) nach einem der Ansprüche 5 oder 6, wobei das Differentialgetriebe (11, 111, 211, 311, 611) in eine Schaltstellung einer Drehrichtungsumkehr verbringbar ist, durch die eine Drehrichtung einer von der Verbrennungskraftmaschine (3; 103; 203; 303) angetriebenen Welle umzukehren ist.

8. Hybridantrieb (1, 101, 201, 301) nach einem der Ansprüche 2 bis 7, wobei das Klauenschaltelement als Kopplungsglied zwischen dem ersten Teilgetriebe (11, 111, 211, 311, 611) und dem zweiten Teilgetriebe (13, 113, 213, 313, 613) ausgebildet ist,
wodurch in zumindest einer Schaltstellung eine Kraft- und/oder Momentenflussstrecke von dem ersten Teilgetriebe (11, 111, 211, 311, 611) auf das zweite Teilgetriebe (13, 113, 213, 313, 613) herstellbar ist.

9. Hybridantrieb (1, 101, 201, 301) nach einem der Ansprüche 2 bis 8, wobei die zweite Kraftmaschine an einer äußeren Welle der koaxialen Zentralwelle (25, 125, 225, 325, 525, 625, 825, 1125, 1125') angelängt ist und
vorzugsweise die erste Kraftmaschine an einem Hohlrad des Differentialgetriebes (17) angelängt ist.

10. Hybridantrieb (1, 101, 201, 301) nach Anspruch 9, wobei
das Leistungsverzweigungsgetriebe (15, 115, 215) ein zweistufiges Planetengetriebe ist, dessen Kraftflussrichtung vorzugsweise von dem Hohlrad über Planeten auf das Sonnenrad vorgesehen ist,
wobei das Sonnenrad mittels dem Klauenschaltelement (33, 133, 333, 501, 633) an die Zentralwelle (25, 125, 225, 325, 525, 625, 825, 1125, 1125^{I}) an- und abkuppelbar ist.

11. Hybridantrieb (1, 101, 201, 301) nach einem der vorhergehenden Ansprüche 9 oder 10, wobei eine Kraftflussrichtung von dem Hohlrad über Planeten auf Planetenträger vorgesehen ist.

12. Hybridantrieb (1, 101, 201, 301) nach einem der vorhergehenden Ansprüche, wobei das Klauenschaltelement in eine Schaltstellung bringbar ist, in der ein Blockumlauf des Leistungsverzweigungsgetriebes (15, 115, 215), insbesondere des Differentialgetriebes, hergestellt ist.

13. Hybridantrieb (1, 101, 201, 301) nach einem der vorhergehenden Ansprüche, wobei das Klauenschaltelement für eine wechselweise Aufschaltung eines abtreibenden Rotationskörpers des Leistungsverzweigungsgetriebes (15, 115, 215), insbesondere in der Form eines Planetengetriebes, insbesondere längsverschieblich, vorzugsweise unter Nutzung einer Muffe, ausgestaltet ist.

14. Hybridantrieb (1, 101, 201, 301) nach einem der vorhergehenden Ansprüche 9 bis 13,
wobei das schaltbare Getriebe (9, 109, 209, 309),
insbesondere das Stirnradnebenwellengetriebe (23, 123, 223),
ein wenigstens zwei, vorzugsweise drei oder vier Klauenschaltelemente umfassendes Windungsgetriebe ist,
in dem insbesondere die äußere Welle der Zentralwelle (25, 125, 225, 325, 525, 625, 825, 1125, 1125') als zweiteilige Welle vorliegt, wobei zumindest eine von zwei Teilwellen durch ein Klauenschaltelement schaltbar ist.

15. Hybridantrieb (1, 101, 201, 301) nach einem der vorhergehenden Ansprüche, wobei das schaltbare Getriebe (9, 109, 209, 309),
insbesondere das Stirnradnebenwellengetriebe,
Zahnradpaarungen aufweist, die geometrische Stufungen zwischen Gängen schaffen.

16. Hybridantrieb (1, 101, 201, 301) nach einem der Ansprüche 5 bis 15, wobei
ein Klauenverbinder, der insbesondere Teil des Klauenschaltelements ist, vier Schaltstellungen hat,
von denen insbesondere eine Schaltstellung eine Verblockung des Leistungsverzweigungsgetriebes (15, 115, 215), insbesondere in der Form des Planetengetriebes, bewirkt,
eine weitere Schaltstellung, vorzugsweise in einer Neutralstellung, einen ausschließlich elektrischen Antriebsmodus bewirkt,
eine weitere Schaltstellung einen kombinatorischen Antrieb durch die Verbrennungskraftmaschine (3; 103; 203; 303) und wenigstens eine der weiteren Kraftmaschinen (5, 7; 105, 107; 205, 207; 305, 307) bewirkt und
vorzugsweise eine weitere Schaltstellung eine Drehrichtungsumkehr eines Abtriebszahnrads des Stirnradnebenwellengetriebes (23, 123, 223) bewirkt.

17. Hybridantrieb (1, 101, 201, 301) nach einem der Ansprüche 5 bis 16, wobei beide Elektromaschinen (5, 7; 105, 107; 205, 207; 305, 307) nebeneinander liegend, vorzugsweise in einer Wandler- und/oder Kupplungsglocke angeordnet, zwischen der Verbrennungskraftmaschine (3; 103; 203; 303) und dem schaltbaren Getriebe (9, 109, 209, 309) platziert sind.

18. Verfahren zum Schalten eines Hybridantriebs (1, 101, 201, 301),
der nach einem der vorhergehenden Ansprüche gestaltet ist und
in dessen Getriebe (9, 109, 209, 309) das Leistungsverzweigungsgetriebe (15, 115, 215) und das schaltbare Getriebe mechanisch an- und abkoppelbar sind,
**dadurch gekennzeichnet, dass**
eine Klauenmuffe als Teil des Klauenschaltelements zwischen dem abtreibenden Rotationskörper des Leistungsverzweigungsgetriebes (15, 115, 215) und der koaxialen Zentralwelle (25, 125, 225, 325, 525, 625, 825, 1125, 1125^{I}) wenigstens vier Schaltstellungen (I, I^{I}, I^{II}, I^{III}, II, II^{I}, II^{II}, II^{III}, III, III^{A}, III^{B}, III^{I}, III^{II}, III^{III}, IV, V) hat, zwischen denen im Betrieb des Hybridantriebs (1, 101, 201, 301) mit Hilfe eines Führungselements (503) wechselweise geschaltet wird.

19. Verfahren zum Schalten eines Hybridantriebs (1, 101, 201, 301) nach Anspruch 18, **dadurch gekennzeichnet, dass**
Innen- und/oder Außenverzahnungen, insbesondere in der Form eines Zahnkranzes, an der Klauenmuffe durch eine Längsbewegung in nacheinander folgende Eingriffe mit Rotationskörpern des Leistungsverzweigungsgetriebes (15, 115, 215) und/oder des schaltbaren Getriebes (13, 113, 213, 313, 613) gebracht werden, um von einer ersten Betriebsart des Hybridantriebs (1, 101, 201, 301), wie einem mechanisch leistungsverzweigten Betrieb, in eine zweite Betriebsart des Hybridantriebs (1, 101, 201, 301), wie einem ausschließlichen elektrischen Antriebsmodus, zu wechseln.

20. Verfahren zum Schalten eines Hybridantriebs (1, 101, 201, 301) nach einem der Ansprüche 18 oder 19,
**dadurch gekennzeichnet, dass**
das Leistungsverzweigungsgetriebe (15, 115, 215) ein verblockbares Planetengetriebe ist und/oder
dass das schaltbare Getriebe ein Stirnradgetriebe (23, 123, 223) ist.

## Claims

1. Hybrid drive (1, 101, 201, 301),
comprising a power-split, power-shiftable transmission (9, 109, 209, 309),
which has a shiftable transmission (13, 113, 213, 313, 613), such as a spur gear countershaft transmission (23, 123, 223), with a coaxial central shaft (25, 125, 225, 325, 525, 625, 825, 1125, 1125^{I}) configured as a hollow shaft/inner shaft pair, and
a power-split transmission (15, 115, 215) arranged in drive terms upstream of the shiftable transmission (13, 113, 213, 313, 613), such as the spur gear countershaft transmission (23, 123, 223),
wherein the hybrid drive (1, 101, 201, 301) includes at least three power-generating machines (3, 5, 7; 103, 105, 107; 203, 205, 207; 303, 305, 307),
of which at least two are electric machines (5, 7; 105, 107; 205, 207; 305, 307) that can be used as drive motors and/or as generators, and
two of the power-generating machines (3, 5, 7; 103, 105, 107; 203, 205, 207; 303, 305, 307), of which at least one can be operated both as a drive motor and as an electric generator, are each connected or able to be connected to a shaft of the coaxial central shaft (25, 125, 225, 325, 525, 625, 825, 1125, 1125^{I}) in a rotatable and/or rotationally fixed manner,
wherein a first claw shift element (33, 133, 333, 501, 633) having at least four shift positions is arranged as a power flow connector between a rotating body of the power-split transmission (15, 115, 215), such as a sun gear, and one of the shafts of the central shaft (25, 125, 225, 325, 525, 625, 825, 1125, 1125^{I}), which first claw shift element can make shift changes even under load, without tractive power being interrupted due to the shift change.

2. Hybrid drive (1, 101, 201, 301) according to claim 1, wherein
the shiftable transmission (13, 113, 213, 313, 613) is configured in the form of a second sub-transmission (13, 113, 213, 313, 613), and/or
the power-split transmission (15, 115, 215) is configured in the form of a first sub-transmission (11, 111, 211, 311, 611),
which in terms of its design preferably corresponds functionally to a differential transmission of the planetary type.

3. Hybrid drive (1, 101, 201, 301) according to claim 1 or claim 2, wherein
the first claw shift element (33, 133, 333, 501, 633) has at least two sliding sleeve-like sliding parts (505, 505', 507, 509, 733, 733', 735, 735^{I}, 933, 935), wherein a thrust movement can be imparted to one of the two sliding sleeve-like sliding parts (505, 505', 507, 509, 733, 733', 735, 735^{I}, 933, 935) by means of a guide element (503),
as a result of which in particular two respective parts of the claw shift element (33, 133, 333, 501, 633) can engage with each other by means of toothings (521, 521^{I}, 521") on the sliding sleeve-like sliding parts (505, 505', 507, 509, 733, 733', 735, 735', 933, 935), in order to establish form-fitting connections between individual parts of the first claw shift element (33, 133, 333, 501, 633), and in this way the claw shift element (33, 133, 333, 501, 633) can be alternately shifted.

4. Hybrid drive (1, 101, 201, 301) according to claim 3, wherein
in one shift position, one sliding sleeve-like sliding part (507, 733, 733', 933) in the claw shift element (33, 133, 333, 501, 633) is connected in the manner of a bridge in order to enable a load to be transmitted via the first claw shift element (33, 133, 333, 501, 633), while the other sliding sleeve-like sliding part (509, 735^{I}, 935) has at least one degree of freedom in order to be brought into a different shift position.

5. Hybrid drive (1, 101, 201, 301) according to any one of claims 1 to 4, wherein
one of the power-generating machines (3, 5, 7; 103, 105, 107; 203, 205, 207; 303, 305, 307) used as driving machines is an internal combustion engine (3; 103; 203; 303), wherein preferably at least one of the two electric machines (5, 7; 105, 107; 205, 207; 305, 307) is placed in terms of power flow and/or torque flow between the internal combustion engine (3; 103; 203; 303) and the shiftable transmission (9, 109, 209, 309), in particular in such a way as to be able to be coupled into the power flow and/or torque flow.

6. Hybrid drive (1, 101, 201, 301) according to claim 5, wherein
a reversal of the direction of rotation in comparison to a direction of rotation of a shaft leading out of the internal combustion engine (3; 103; 203; 303) can be achieved in that the second power-generating machine can run in a forward mode or in a reverse mode, wherein electrical energy for driving the second power-generating machine can be drawn from a generator mode of the first power-generating machine, which is rotated by a shaft that is driven by the internal combustion engine (3; 103; 203; 303).

7. Hybrid drive (1, 101, 201, 301) according to any one of claims 5 or 6, wherein
the differential transmission (11, 111, 211, 311, 611) can be brought into a shift position for reversing the direction of rotation, by which a direction of rotation of a shaft that is driven by the internal combustion engine (3; 103; 203; 303) is to be reversed.

8. Hybrid drive (1, 101, 201, 301) according to any one of claims 2 to 7, wherein
the claw shift element is designed as a coupling link between the first sub-transmission (11, 111, 211, 311, 611) and the second sub-transmission (13, 113, 213, 313, 613), as a result of which, in at least one shift position, a power flow and/or torque flow path from the first sub-transmission (11, 111, 211, 311, 611) to the second sub-transmission (13, 113, 213, 313, 613) can be achieved.

9. Hybrid drive (1, 101, 201, 301) according to any one of claims 2 to 8, wherein
the second power-generating machine is attached to an outer shaft of the coaxial central shaft (25, 125, 225, 325, 525, 625, 825, 1125, 1125^{I}), and
preferably the first power-generating machine is attached to a ring gear of the differential transmission (17).

10. Hybrid drive (1, 101, 201, 301) according to claim 9, wherein
the power-split transmission (15, 115, 215) is a two-stage planetary transmission, the power flow direction of which is preferably provided from the ring gear, via planets, to the sun gear,
wherein the sun gear can be coupled to and uncoupled from the central shaft (25, 125, 225, 325, 525, 625, 825, 1125, 1125^{I}) by means of the claw shift element (33, 133, 333, 501, 633).

11. Hybrid drive (1, 101, 201, 301) according to any one of the preceding claims 9 or 10, wherein a power flow direction is provided from the ring gear, via planets, to planet carriers.

12. Hybrid drive (1, 101, 201, 301) according to any one of the preceding claims, wherein the claw shift element can be brought into a shift position in which a rotation en bloc of the power-split transmission (15, 115, 215), in particular of the differential transmission, is achieved.

13. Hybrid drive (1, 101, 201, 301) according to any one of the preceding claims, wherein the claw shift element is configured to alternately connect an output rotating body of the power-split transmission (15, 115, 215), in particular in the form of a planetary transmission, in particular in a longitudinally displaceable manner, preferably using a sleeve.

14. Hybrid drive (1, 101, 201, 301) according to any one of the preceding claims 9 to 13,
wherein the shiftable transmission (9, 109, 209, 309),
in particular the spur gear countershaft transmission (23, 123, 223),
is a winding transmission comprising at least two, preferably three or four claw shift elements,
in which in particular the outer shaft of the central shaft (25, 125, 225, 325, 525, 625, 825, 1125, 1125^{I}) is in the form of a two-part shaft, with at least one shaft part of the two-part shaft being arranged to be shifted by a claw shift element.

15. Hybrid drive (1, 101, 201, 301) according to any one of the preceding claims, wherein the shiftable transmission (9, 109, 209, 309),
in particular the spur gear countershaft transmission,
has pairs of gearwheels which create geometric gradations between gears.

16. Hybrid drive (1, 101, 201, 301) according to any one of claims 5 to 15, wherein
a claw connector, which in particular is part of the claw shift element, has four shift positions,
of which in particular one shift position effects the power-split transmission (15, 115, 215), in particular in the form of the planetary transmission, being locked,
a further shift position, preferably in a neutral position, effects an exclusively electric drive mode,
a further shift position effects combinatory driving by the internal combustion engine (3; 103; 203; 303) and at least one of the other power-generating machines (5, 7; 105, 107; 205, 207; 305, 307), and
preferably a further shift position effects a reversal of the direction of rotation of an output gearwheel of the spur gear countershaft transmission (23, 123, 223).

17. Hybrid drive (1, 101, 201, 301) according to any one of claims 5 to 16, wherein
the two electric machines (5, 7; 105, 107; 205, 207; 305, 307), located next to each other, are preferably arranged in a converter and/or clutch housing and are placed between the internal combustion engine (3; 103; 203; 303) and the shiftable transmission (9, 109, 209, 309).

18. Method for switching a hybrid drive (1, 101, 201, 301),
which is configured according to any one of the preceding claims, of which the power-split transmission (15, 115, 215) and the shiftable transmission of the transmission (9, 109, 209, 309) of the hybrid drive can be mechanically coupled and uncoupled,
**characterized in that**
a claw sleeve, as part of the claw shift element between the output rotating body of the power-split transmission (15, 115, 215) and the coaxial central shaft (25, 125, 225, 325, 525, 625, 825, 1125, 1125^{I}), has at least four shift positions (I, I^{I}, I^{II}, I^{III}, II, II^{I}, II^{II}, II^{III}, III, III^{A}, III^{B}, III^{I}, III^{II}, III^{III}, IV, V),
between which shifting alternately takes place by means of a guide element (503) during operation of the hybrid drive (1, 101, 201, 301).

19. Method for switching a hybrid drive (1, 101, 201, 301) according to claim 18,
**characterized in that**
inner and/or outer toothings, in particular in the form of a toothed rim, on the claw sleeve are brought into successive engagement, by way of a longitudinal movement, with rotating bodies of the power-split transmission (15, 115, 215) and/or of the shiftable transmission (13, 113, 213, 313, 613) in order to alternate from a first mode of operation of the hybrid drive (1, 101, 201, 301), such as a mode in which the power is mechanically split, into a second mode of operation of the hybrid drive (1, 101, 201, 301), such as an exclusively electric drive mode.

20. Method for switching a hybrid drive (1, 101, 201, 301) according to any one of claims 18 or 19,
**characterized in that**
the power-split transmission (15, 115, 215) is a lockable planetary transmission, and/or in that the shiftable transmission is a spur gear transmission (23, 123, 223).

## Revendications

1. Entraînement hybride (1, 101, 201, 301)
avec une transmission commutable sous charge et à dérivation de puissance (9, 109, 209, 309),
qui présente une transmission commutable (13, 113, 213, 313, 613), telle une transmission à arbre intermédiaire d'engrenage (23, 123, 223), avec un arbre central coaxial conçu en tant que paire d'arbres creux-arbres intérieurs (25, 125, 225, 325, 525, 625, 825, 1125, 1125^{I}) et
une transmission à dérivation de puissance (15, 115, 215) agencée du point de vue de l'entraînement en amont de la transmission commutable (13, 113, 213, 313, 613), telle la transmission à arbre intermédiaire d'engrenage (23, 123, 223),
dans lequel dans l'entraînement hybride (1, 101, 201, 301) sont présents au moins trois moteurs (3, 5, 7 ; 103, 105, 107 ; 203, 205, 207 ; 303, 305, 307),
dont au moins deux sont des machines électriques (5, 7 ; 105, 107 ; 205, 207 ; 305, 307) utilisables en tant que moteur d'entraînement et/ou en tant que générateur et deux des moteurs (3, 5, 7 ; 103, 105, 107 ; 203, 205, 207 ; 303, 305, 307), dont au moins l'un peut être actionné tant en tant que moteur d'entraînement qu'en tant que générateur électrique, sont ou peuvent être respectivement amenés en relation de rotation et/ou en excluant toute rotation avec un arbre de l'arbre central (25, 125, 225, 325, 525, 625, 825, 1125, 1125^{I}) coaxial,
dans lequel un premier élément de commutation à griffes (33, 133, 333, 501, 633) avec au moins quatre positions de commutation est agencé en tant que raccord de flux de force entre un corps de rotation de la transmission à dérivation de puissance (15, 115, 215) telle une roue solaire et l'un des arbres de l'arbre central (25, 125, 225, 325, 525, 625, 825, 1125, 1125^{I}), lequel premier élément de commutation à griffes peut lui-même réaliser sous charge un changement de commutation sans qu'une interruption de force de traction ne se produise du fait du changement de commutation.

2. Entraînement hybride (1, 101, 201, 301) selon la revendication 1, dans lequel
la transmission commutable (13, 113, 213, 313, 613) est conçue sous la forme d'une seconde transmission partielle (13, 113, 213, 313, 613) et/ou
la transmission à dérivation de puissance (15, 115, 215) est conçue sous la forme d'une première transmission partielle (11, 111, 211, 311, 611),
qui de préférence dans son mode de réalisation correspond de façon fonctionnelle à une transmission différentielle dans une conception de transmission planétaire.

3. Entraînement hybride (1, 101, 201, 301) selon la revendication 1 ou la revendication 2, dans lequel
le premier élément de commutation à griffes (33, 133, 333, 501, 633) a au moins deux parties coulissantes (505, 505^{I}, 507, 509, 733, 733^{I}, 735, 735^{I}, 933, 935) de type manchon coulissant, dans lequel à l'aide d'un élément de guidage (503) un mouvement coulissant peut être engagé au niveau de l'une des deux parties coulissantes (505, 505^{I}, 507, 509, 733, 733^{I}, 735, 735^{I}, 933, 935) de type manchon coulissant,
moyennant quoi en particulier des mises en prise réciproques de respectivement deux parties de l'élément de commutation à griffes (33, 133, 333, 501, 633) peuvent être formées par des dentures (521, 521^{I}, 521^{II}) au niveau des parties coulissantes (505, 505', 507, 509, 733, 733^{I}, 735, 735^{I}, 933, 935) de type manchon coulissant pour la réalisation de liaisons de forme entre des parties individuelles du premier élément de commutation à griffes (33, 133, 333, 501, 633) et l'élément de commutation à griffes (33, 133, 333, 501, 633) peut ainsi être alternativement commuté.

4. Entraînement hybride (1, 101, 201, 301) selon la revendication 3, dans lequel dans une position de commutation la une partie coulissante (507, 733, 733^{I}, 933) de type manchon coulissant se trouve dans l'élément de commutation à griffes (33, 133, 333, 501, 633) dans une liaison de type pont pour permettre un transfert d'une charge via le premier élément de commutation à griffes (33, 133, 333, 501, 633),
pendant que l'autre partie coulissante (509, 735^{I}, 935) de type manchon coulissant a au moins un degré de liberté pour être amené dans une autre position de commutation.

5. Entraînement hybride (1, 101, 201, 301) selon l'une des revendication 1 à 4, dans lequel l'un des moteurs (3, 5, 7 ; 103, 105, 107 ; 203, 205, 207 ; 303, 305, 307) utilisés en tant que machines d'entraînement est un moteur à combustion interne (3 ; 103 ; 203 ; 303), dans lequel de préférence du point de vue du flux de force et/ou du flux de moments au moins l'un des deux moteurs électriques (5, 7 ; 105, 107 ; 205, 207 ; 305, 307) est placé entre le moteur à combustion interne (3 ; 103 ; 203 ; 303) et la transmission commutable (9, 109, 209, 309), en particulier de façon à pouvoir être couplé dans le flux de force et/ou de moments.

6. Entraînement hybride (1, 101, 201, 301) selon la revendication 5, dans lequel une inversion de direction de rotation comparé à un sens de rotation d'un arbre sortant du moteur à combustion interne (3 ; 103 ; 203 ; 303) peut être réalisée en ce que le second moteur propose une marche avant et une marche arrière, dans lequel une énergie électrique peut être puisée pour l'entraînement du second moteur à partir d'un fonctionnement de générateur du premier moteur, qui est tourné par un arbre entraîné par le moteur à combustion interne (3 ; 103 ; 203 ; 303).

7. Entraînement hybride (1, 101, 201, 301) selon l'une des revendications 5 ou 6, dans lequel
la transmission différentielle (11, 111, 211, 311, 611) peut être amenée dans une position de commutation d'une inversion de direction de rotation par la une direction de rotation d'un arbre entraîné par le moteur à combustion interne (3 ; 103 ; 203 ; 303).

8. Entraînement hybride (1, 101, 201, 301) selon l'une des revendications 2 à 7, dans lequel
l'élément de commutation à griffes est conçu en tant qu'organe d'accouplement entre la première transmission partielle (11, 111, 211, 311, 611) et la seconde transmission partielle (13, 113, 213, 313, 613),
moyennant quoi une trajectoire de flux de force et/ou de moments peut être réalisée depuis la première transmission partielle (11, 111, 211, 311, 611) vers la seconde transmission partielle (13, 113, 213, 313, 613) dans au moins une position de commutation.

9. Entraînement hybride (1, 101, 201, 301) selon l'une des revendications 2 à 8, dans lequel
le second moteur est relié à un arbre extérieur de l'arbre central (25, 125, 225, 325, 525, 625, 825, 1125, 1125^{I}) coaxial et
de préférence le premier moteur est positionné contre une roue creuse de la transmission différentielle (17).

10. Entraînement hybride (1, 101, 201, 301) selon la revendication 9, dans lequel
la transmission à dérivation de puissance (15, 115, 215) est une transmission planétaire à deux étages dont la direction de flux de force est de préférence prévue depuis la roue creuse via des planétaires vers la roue solaire,
dans lequel la roue solaire peut être couplée à et découplée de l'arbre central (25, 125, 225, 325, 525, 625, 825, 1125, 1125^{I}) au moyen de l'élément de commutation à griffes (33, 133, 333, 501, 633).

11. Entraînement hybride (1, 101, 201, 301) selon l'une des revendications précédentes 9 ou 10, dans lequel une direction de flux de force est prévue depuis la roue creuse via des planétaires vers le support planétaire.

12. Entraînement hybride (1, 101, 201, 301) selon l'une des revendications précédentes, dans lequel l'élément de commutation à griffes peut être amené dans une position de commutation dans laquelle est réalisée une prise directe de la transmission à dérivation de puissance (15, 115, 215), en particulier de la transmission différentielle.

13. Entraînement hybride (1, 101, 201, 301) selon l'une des revendications précédentes, dans lequel
l'élément de commutation à griffes est conçu pour une mise en service en alternance d'un corps de rotation mené de la transmission à dérivation de puissance (15, 115, 215), en particulier sous la forme d'une transmission planétaire, en particulier longitudinalement coulissante, de préférence en utilisant un manchon.

14. Entraînement hybride (1, 101, 201, 301) selon l'une des revendications précédentes 9 à 13, dans lequel la transmission commutable (9, 109, 209, 309),
en particulier la transmission à arbre intermédiaire d'engrenage (23, 123, 223),
est une transmission à spires comprenant au moins deux, de préférence trois ou quatre éléments de commutation à griffes,
dans laquelle en particulier l'arbre extérieur de l'arbre central (25, 125, 225, 325, 525, 625, 825, 1125, 1125^{I}) se présente en tant qu'arbre en deux parties, dans lequel au moins l'un de deux arbres partiels peut être commuté par un élément de commutation à griffes.

15. Entraînement hybride (1, 101, 201, 301) selon l'une des revendications précédentes,
dans lequel la transmission commutable (9, 109, 209, 309),
en particulier la transmission à arbre intermédiaire d'engrenage,
présente des couples de roues dentées qui créent des paliers géométriques entre les vitesses.

16. Entraînement hybride (1, 101, 201, 301) selon l'une des revendications 5 à 15, dans lequel
un raccord de griffes, qui fait en particulier partie de l'élément de commutation à griffes, a quatre positions de commutation,
dont en particulier une position de commutation produit un blocage de la transmission à dérivation de puissance (15, 115, 215), en particulier sous la forme de la transmission planétaire,
une autre position de commutation, de préférence dans une position neutre, produit un mode d'entraînement exclusivement électrique,
une autre position de commutation produit un entraînement combinatoire par le moteur à combustion interne (3 ; 103 ; 203 ; 303) et au moins l'un des autres moteurs (5, 7; 105, 107; 205, 207; 305, 307) et
de préférence une autre position de commutation produit une inversion de direction de rotation d'une roue dentée menée de la transmission à arbre intermédiaire d'engrenage (23, 123, 223).

17. Entraînement hybride (1, 101, 201, 301) selon l'une des revendications 5 à 16, dans lequel
les deux machines électriques (5, 7; 105, 107; 205, 207; 305, 307) sont agencées côte à côte, de préférence dans une cloche de convertisseur et/ou d'embrayage, placées entre le moteur à combustion interne (3 ; 103 ; 203 ; 303) et la transmission commutable (9, 109, 209, 309).

18. Procédé de commutation d'un entraînement hybride (1, 101, 201, 301),
qui est aménagé selon l'une des revendications précédentes et
dans la transmission (9, 109, 209, 309) duquel la transmission à dérivation de puissance (15, 115, 215) et la transmission commutable peuvent être mécaniquement couplées et découplées,
**caractérisé en ce que**
un manchon à griffes en tant que partie de l'élément de commutation à griffes a au moins quatre positions de commutations (I, I^{I}, I^{II} I^{III}, II, II^{I}, II^{II}, II^{III}, III, III^{A}, III^{B}, III^{I}, III^{II}, III^{III}, IV, V) entre le corps de rotation mené de la transmission à dérivation de puissance (15, 115, 215) et l'arbre central (25, 125, 225, 325, 525, 625, 825, 1125, 1125^{I}) coaxial, entre lesquelles il est alternativement commuté en fonctionnement de l'entraînement hybride (1, 101, 201, 301) à l'aide d'un élément de guidage (503).

19. Procédé de commutation d'un entraînement hybride (1, 101, 201, 301) selon la revendication 18, **caractérisé en ce que**
des dentures intérieures et/ou extérieures, en particulier sous la forme d'une couronne dentée, sont amenées contre le manchon à griffes par un mouvement longitudinal en mises en prise successives avec des corps de rotation de la transmission à dérivation de puissance (15, 115, 215) et/ou de la transmission commutable (13, 113, 213, 313, 613), pour passer d'un premier type de fonctionnement de l'entraînement hybride (1, 101, 201, 301), tel un fonctionnement à dérivation de puissance mécanique, à un second type de fonctionnement de l'entraînement hybride (1, 101, 201, 301), tel un mode d'entraînement exclusivement électrique.

20. Procédé de commutation d'un entraînement hybride (1, 101, 201, 301) selon l'une des revendications 18 ou 19,
**caractérisé en ce que**
la transmission à dérivation de puissance (15, 115, 215) est une transmission planétaire qui peut être bloquée et/ou
**en ce que** la transmission commutable est une transmission d'engrenage (23, 123, 223).
